# EUROPEAN PATENT SPECIFICATION

(11) **EP 4 292 499 B1**
(45) Date of publication and mention of the grant of the patent: **01.04.2026**
(21) Application number: 22752318.0
(22) Date of filing: 10.02.2022
(51) Int. Cl.: A47L 11/24, A47L 11/282, A47L 11/284, A47L 11/40, A47L 9/28

(54) **CLEANING METHOD AND APPARATUS FOR AUTOMATIC CLEANING DEVICE, MEDIUM, AND ELECTRONIC DEVICE**
REINIGUNGSVERFAHREN UND -VORRICHTUNG FÜR AUTOMATISCHE REINIGUNGSVORRICHTUNG, MEDIUM UND ELEKTRONISCHE VORRICHTUNG
PROCÉDÉ ET APPAREIL DE NETTOYAGE POUR DISPOSITIF DE NETTOYAGE AUTOMATIQUE, SUPPORT, ET DISPOSITIF ÉLECTRONIQUE

(30) Priority: 10.02.2021 CN 202110184845; 10.02.2021 CN 202110184703
(43) Date of publication of application: 20.12.2023
(60) Divisional application: 26158829.7
(73) Proprietor: Beijing Roborock Innovation Technology Co., Ltd., Beijing 102206 (CN)
(72) Inventor: WANG, Lei, Beijing 102206 (CN); HOU, Zhengtao, Beijing 102206 (CN); WANG, Kaijing, Beijing 102206 (CN); HE, Yang, Beijing 102206 (CN)
(74) Representative: Petraz, Gilberto Luigi
(86) International application number: PCT/CN2022/075772
(87) International publication number: WO 2022/171158

(56) References cited:
- CN-A- 102 551 591
- CN-A- 109 984 685
- CN-A- 110 279 347
- CN-A- 110 772 178
- CN-A- 111 035 327
- CN-A- 113 693 495
- US-A1- 2012 125 363
- US-A1- 2016 103 451
- US-A1- 2017 215 680
- US-A1- 2020 178 748

## Description

### TECHNICAL FIELD

The present invention relates to field of smart homes, and particularly to a cleaning method and apparatus for an automatic cleaning device, a computer-readable storage medium and an electronic device.

### BACKGROUND ART

In recent years, with the rapid developments of computer technologies and artificial intelligence science, an intelligent robot technology has gradually become a hot spot in the field of modern robot research. A sweeping robot, as one of the most practical intelligent robots, can automatically clean the ground by certain artificial intelligence.

At present, more and more families have laid carpets. During cleaning of a room with the carpet, cleaning modes need to be switched according to different mediums of the carpet and a floor, resulting in low efficiency in the cleaning process. A cleaning apparatus for an automatic cleaning device is already known e.g. from US-A-2020178748.

### SUMMARY OF THE INVENTION

Objectives of the present invention are to provide a cleaning method and apparatus for an automatic cleaning device, a computer-readable storage medium and an electronic device, which can solve at least one of the technical problems mentioned above. The specific solutions are as follows.

According to specific embodiments of the present invention, in a first aspect, the present invention provides a cleaning method for an automatic cleaning device, used for a dual-region cleaning mode including cleaning of a first surface medium region and a second surface medium region, and including:
after the automatic cleaning device enters the dual-region cleaning mode, determining whether the second surface medium region exists according to a stored map in the automatic cleaning device;
in response to that the second surface medium region exists, cleaning the second surface medium region;
after cleaning of the second surface medium region is completed, marking the second surface medium region as a cleaned region, determining whether a next second surface medium region exists, and cleaning the next second surface medium region in response to that the next second surface medium region exists, until cleaning of all second surface medium regions is completed; and
controlling the automatic cleaning device to clean the first surface medium region.

Optionally, determining whether the second surface medium region exists according to the stored map in the automatic cleaning device includes:
determining whether the stored map has the second surface medium region; and
in response to that the stored map has the second surface medium region, controlling the automatic cleaning device to enter a position of the second surface medium region recorded in the stored map, and detecting whether the second surface medium region exists.

Optionally, in response to that the second surface medium region is not detected, the second surface medium region is deleted from the stored map to update the stored map.

Optionally, in the process of controlling the automatic cleaning device to clean the first surface medium region, the method further includes:
detecting whether a second surface medium region which is not cleaned still exists;
in response to that the second surface medium region which is not cleaned exists, controlling the automatic cleaning device to clean the second surface medium region which is not cleaned and storing the second surface medium region which is not cleaned in the stored map; and
after cleaning of all second surface medium regions which are not cleaned is completed, controlling the automatic cleaning device to continue cleaning of the first surface medium region until cleaning of the first surface medium region is completed.

Optionally, the method further includes:
in a process of cleaning the second surface medium region, in response to that the second surface medium region is a cross-block region, ignoring a block restriction, and controlling a cleaning robot to clean an entirety of the second surface medium region.

Optionally, before the automatic cleaning device enters the dual-region cleaning mode, the method further includes:
controlling the automatic cleaning device to enter a wall-following cleaning mode;
in response to that the automatic cleaning device detects the second surface medium region in a wall-following cleaning process, ignoring the second surface medium region, and controlling the automatic cleaning device to continue wall-following cleaning until the wall-following cleaning ends and the automatic cleaning device exits the wall-following cleaning mode; and
controlling the automatic cleaning device to enter the dual-region cleaning mode.

Optionally, in the wall-following cleaning process, the detected second surface medium region is marked, and whether the second surface medium region exists in the stored map is determined; and
if the second surface medium region does not exist in the stored map , the second surface medium region is stored in the stored map.

Optionally, cleaning the second surface medium region includes:
cleaning, in the second surface medium region, a boundary region of the second surface medium region; and
after cleaning of the boundary region is completed, cleaning remaining regions of the second surface medium region.

In a second aspect, the present invention provides a cleaning apparatus for an automatic cleaning device, used for a dual-region cleaning mode including cleaning of a first surface medium region and a second surface medium region, and the apparatus including:
a region determination module configured to, after the automatic cleaning device enters the dual-region cleaning mode, determine whether the second surface medium region exists according to a stored map in the automatic cleaning device;
a first cleaning control module configured to: in response to that the second surface medium region exists, clean the second surface medium region; and after cleaning of the second surface medium region is completed, mark the second surface medium region as a cleaned region, determine whether a next second surface medium region exists, and clean the next second surface medium region in response to that the next second surface medium region exists, until cleaning of all second surface medium regions is completed; and
a second cleaning control module configured to control the automatic cleaning device to clean the first surface medium region.

In a third aspect, the present invention provides a computer-readable storage medium, having a computer program stored thereon, wherein when the computer program is executed by a processor, the above cleaning method for the automatic cleaning device is implemented.

In a fourth aspect, the present invention provides an electronic device including:
a processor; and
a memory for storing instructions executable by the processor,
wherein the processor is configured to perform the above cleaning method for the automatic cleaning device by executing the executable instructions.

Compared with the related art, in the cleaning method for the automatic cleaning device according to the exemplary embodiments of the present disclosure, when the automatic cleaning device cleans the first surface medium region and the second surface medium region, the automatic cleaning device can be controlled to clean the second surface medium region first, and then clean the first surface medium region after cleaning of the second surface medium region is completed, thereby reducing the number of times for the automatic cleaning device to control a wet cleaning module to be raised and lowered, improving the cleaning efficiency and also prolonging the service life of the automatic cleaning device.

According to a fifth aspect, the present invention provides a method for controlling an automatic cleaning device, including:
when the automatic cleaning device performs cleaning, acquiring first data according to current state data of a walking wheel of the automatic cleaning device, and acquiring second data according to a current body state data of the automatic cleaning device;
determining whether the automatic cleaning device is trapped according to the first data and the second data; and
in response to that the automatic cleaning device is trapped, controlling the automatic cleaning device to enter an accelerated-escape mode.

In an exemplary embodiment, determining whether the automatic cleaning device is trapped according to the first data and the second data includes:
determining whether the automatic cleaning device is trapped according to a difference between the first data and the second data.

In an exemplary embodiment, the method further includes:
acquiring, when the automatic cleaning device is in a rotating state, a theoretical angular velocity of the walking wheel as the first data according to the current state data of the walking wheel of the automatic cleaning device;
acquiring an actual angular velocity of the walking wheel as the second data according to the current body state data of the automatic cleaning device; and
in response to that the difference between the first data and the second data is greater than a first threshold and the difference being greater than the first threshold lasts for first preset time, determining that the automatic cleaning device is trapped.

In an exemplary embodiment, the method further includes:
when the automatic cleaning device is in a straight forward movement state, acquiring theoretical output power of a motor as the first data according to the current state data of the walking wheel of the automatic cleaning device;
according to the current body state data of the automatic cleaning device, acquiring an actual output power of the motor as the second data; and
in response to that the difference between the first data and the second data is less than a second threshold and the difference being less than the second threshold lasts for second preset time, determining that the automatic cleaning device is trapped.

In an exemplary embodiment, acquiring the theoretical output power of the motor according to the current state data of the walking wheel of the automatic cleaning device includes:
according to a current traveling distance of the walking wheel of the automatic cleaning device, determining the theoretical output power of the motor.

In an exemplary embodiment, the method further includes:
when the automatic cleaning device encounters an obstacle and is in a backward movement state, acquiring theoretical output power of the motor as the first data according to the current state data of the walking wheel of the automatic cleaning device;
acquiring an actual output power of the motor as the second data according to the current body state data of the automatic cleaning device; and
in response to that the difference between the first data and the second data is less than a third threshold and the difference being less than the third threshold lasts for third preset time, and a current of a main brush of the automatic cleaning device exceeds a fourth threshold and the current exceeding the fourth threshold lasts for fourth preset time, determining that the automatic cleaning device is trapped.

In an exemplary embodiment, the accelerated-escape mode includes controlling the automatic cleaning device to perform instantaneous acceleration after deceleration.

In an exemplary embodiment, the method further includes:
determining, according to a result of the instantaneous acceleration after deceleration, whether the automatic cleaning device is on a misjudgment-prone medium for which a misjudgment is prone to occur; and
in response to that it is determined that the automatic cleaning device is on the misjudgment-prone medium, turning off the accelerated-escape mode when the automatic cleaning device is on the misjudgment-prone medium.

In an exemplary embodiment, determining whether the automatic cleaning device is on the misjudgment-prone medium according to the result of instantaneous acceleration after deceleration includes:
in response to that a change peak of an accelerometer on the automatic cleaning device exceeds a threshold after the instantaneous acceleration after deceleration, determining that the automatic cleaning device is located on the misjudgment-prone medium.

In an exemplary embodiment, acquiring the first data according to the current state data of the walking wheel of the automatic cleaning device includes:
acquiring, according to sensor data of a walking wheel of the automatic cleaning device, the first data in the current state of the walking wheel.

In an exemplary embodiment, acquiring the second data according to the current body state data of the automatic cleaning device includes:
acquiring the current body state data according to a state sensor on the automatic cleaning device, and then determining the second data according to the current body state data.

In an exemplary embodiment, the state sensor includes a gyroscope, a motor power sensor, a cliff sensor or a touch sensor.

According to a sixth aspect, the present invention provides an apparatus for controlling an automatic cleaning device, the apparatus including:
a data acquisition module configured to, during cleaning of the automatic cleaning device, acquire first data according to current state data of a walking wheel of the automatic cleaning device, and acquire second data according to a current body state data of the automatic cleaning device;
a state determination module configured to determine whether the automatic cleaning device is trapped according to the first data and the second data; and
an escape control module configured to control, in response to that the automatic cleaning device is trapped, the automatic cleaning device to enter an accelerated-escape mode.

According to a seventh aspect, the present invention provides a computer-readable storage medium, having a computer program stored thereon, wherein when the computer program is executed by a processor, the method for controlling the automatic cleaning device according to the fifth aspect or any exemplary embodiment thereof is implemented.

According to an eighth aspect, the present invention provides an electronic device, including:
a processor; and
a memory for storing instructions executable by the processor,
wherein the processor is configured to perform the method for controlling the automatic cleaning device according to the fifth aspect or any exemplary embodiment thereof by executing the executable instructions.

In the method for controlling the automatic cleaning device according to the exemplary embodiments of the present disclosure, during cleaning of the automatic cleaning device, if the first data acquired according to the current state data of the walking wheel is different from the second data acquired according to the current body state data, it can be determined that the automatic cleaning device is trapped; and at this time, it is possible to help the automatic cleaning device escape by the accelerated-escape mode, so as to reduce the probability that the automatic cleaning device gets struck.

### BRIEF DESCRIPTION OF THE DRAWINGS

The accompanying drawings here, which are incorporated in the description and constitute a part of the description, show embodiments conforming to the present invention, and are used to explain the principles of the present invention together with the description. Apparently, the accompanying drawings in the following description show merely some embodiments of the present invention, and those of ordinary skills in the art can also derive other drawings from these accompanying drawings without creative efforts. In the accompanying drawings:
FIG. 1 is an oblique view of an automatic cleaning device according to an embodiment of the present invention;
FIG. 2 is a schematic structural diagram of a bottom of an automatic cleaning device according to an embodiment of the present invention;
FIG. 3 is an oblique view of a driving wheel assembly on a side according to an embodiment of the present invention;
FIG. 4 is a front view of the driving wheel assembly on a side according to an embodiment of the present invention;
FIG. 5 is an oblique view of a dust box according to an embodiment of the present invention;
FIG. 6 is an oblique view of a blower according to an embodiment of the present disclosure;
FIG. 7 is a schematic diagram of a dust box in an open state according to an embodiment of the present invention;
FIG. 8 is a schematic diagram of a dust box and a blower in an assembled state according to an embodiment of the present invention;
FIG. 9 is an exploded view of an automatic cleaning device according to an embodiment of the present invention;
FIG. 10 is a structural diagram of a supporting platform of an automatic cleaning device according to an embodiment of the present invention;
FIG. 11 is a structural diagram of a vibrating member of an automatic cleaning device according to an embodiment of the present invention;
FIG. 12 is a schematic diagram of a cleaning head driving mechanism based on a crank slider mechanism according to another embodiment of the present invention;
FIG. 13 is a schematic diagram of a cleaning head driving mechanism based on a double-crank mechanism according to another embodiment of the present invention;
FIG. 14 is a schematic diagram of a cleaning head driving mechanism based on a crank mechanism according to another embodiment of the present invention;
FIG. 15 is a schematic diagram of an automatic cleaning device in a raised state according to an embodiment of the present invention;
FIG. 16 is a schematic diagram of an automatic cleaning device in a lowered state according to an embodiment of the present invention;
FIG. 17 is a schematic diagram of a four-link raising and lowering structure in a raised state according to an embodiment of the present invention;
FIG. 18 is a schematic diagram of a four-link raising and lowering structure in a lowered state according to an embodiment of the present invention;
FIG. 19 shows a flowchart of a cleaning method for an automatic cleaning device according to an embodiment of the present invention;
FIG. 20 shows a schematic structural diagram of an initialization region after a second surface medium region is scanned according to an embodiment of the present invention;
FIG. 21 shows a schematic structural diagram of a merged region acquired based on the initialization region shown in FIG. 20;
FIG. 22 shows a block diagram of a cleaning apparatus for an automatic cleaning device according to an embodiment of the present invention;
FIG. 23 shows a schematic diagram of modules of an electronic device according to an embodiment of the present invention;
FIG. 24 shows a flowchart of a method for controlling an automatic cleaning device according to an embodiment of the present invention;
FIG. 25 shows a flowchart of operation steps of a method for controlling an automatic cleaning device according to an embodiment of the present invention;
FIG. 26 shows a block diagram of an apparatus for controlling an automatic cleaning device according to an embodiment of the present invention; and
FIG. 27 shows a schematic diagram of modules of another electronic device to an embodiment of the present invention.

### DETAILED DESCRIPTION

To make the objectives, technical solutions and advantages of the present invention clearer, the present disclosure will be further described in detail below with reference to the accompanying drawings. It is obvious that the described embodiments are only some, but not all of the embodiments of the present invention. All other embodiments acquired by those of ordinary skills in the art without creative efforts based on the embodiments in the present disclosure are within the protection scope of the present invention.

The terms used in the embodiments of the present invention are for the purpose of describing particular embodiments only and are not intended to limit the present invention. The singular forms "a/an", "said" and "the" used in the embodiments of the present invention and the appended claims are intended to include the plural forms as well, unless otherwise indicated clearly in the context. The term "a plurality of" generally includes at least two.

It should be understood that, the term "and/or" used herein only describes an association relationship between associated objects, and indicates that there may be three kinds of relationships. For example, A and/or B may indicate three cases: A exists alone, A and B exist at the same time, and B exists alone. In addition, the character "/" herein generally indicates an "or" relationship between the contextual objects.

It is to be understood that, although the terms first, second, third, etc. may be used to describe objects in the embodiments of the present invention, these terms should not be construed as constituting limitations on the present disclosure. These terms are only used to distinguish objects. For example, "first ..." may also be referred to as "second ..." without departing from the scope of the embodiments of the present invention. Similarly, "second ..." may also be referred to as "first ...".

Depending on the context, the words "if" and "on condition that" as used herein may be interpreted as "in the case that ..." or "when ..." or "in response to determining" or "in response to detecting". Similarly, depending on the context, the phrases "if it is determined that" or "if it is detected that (the stated condition or event)" may be interpreted as "when it is determined that" or "in response to determining that" or "when it is detected that (the stated condition or event)" or "in response to detecting (the stated condition or event)".

It should also be noted that the terms "includes/include/including", "comprises/comprise/comprising," or any other variants thereof are intended to cover the nonexclusive inclusion, so that the commodities or devices including a series of elements not only include those elements, but also include other unclearly listed elements, or also include the inherent elements of such commodities or devices. Without more limitations, the element defined by the phrase "including a ..." does not exclude the existence of other same elements in the commodity or device that including such element.

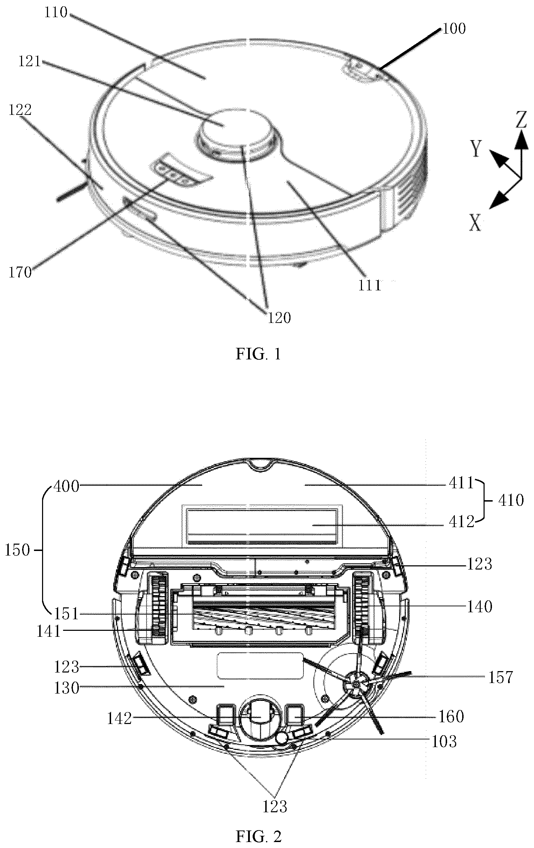

FIGs. 1-2 are schematic structural diagrams of an automatic cleaning device according to an exemplary embodiment. As shown in FIGs. 1-2, the automatic cleaning device may be a vacuum ground sucking robot, or may be a ground mopping/brushing robot, or may be a window climbing robot, or the like. The automatic cleaning device may include a mobile platform 100, a perception system 120, a control system 130, a driving system 140, a cleaning module 150, an energy system 160 and a human-computer interaction system 170.

The mobile platform 100 may be configured to move automatically along a target direction on an operating surface. The operating surface may be a surface to be cleaned by the automatic cleaning device. In some embodiments, the automatic cleaning device may be a ground mopping robot, and thus the automatic cleaning device operates on a ground, and the ground is the operating surface. The automatic cleaning device may also be a window cleaning robot, and thus the automatic cleaning device operates on an outer surface of glass of a building, and the glass is the operating surface. The automatic cleaning device may also be a pipe cleaning robot, and thus the automatic cleaning device operates on an inner surface of a pipe, and the inner surface of the pipe is the operating surface. For the purpose of presentation only, the following description in the present application takes a ground mopping robot as an example for illustration.

In some embodiments, the mobile platform 100 may be an autonomous mobile platform, or a non-autonomous mobile platform. The autonomous mobile platform refers to that the mobile platform 100 itself can automatically and adaptively make an operational decision based on an unexpected environmental input; and the non-autonomous mobile platform itself cannot adaptively make an operational decision based on an unexpected environmental input, but can execute a given procedure or operate according to a certain logic. Correspondingly, when the mobile platform 100 is the autonomous mobile platform, the target direction may be determined autonomously by the automatic cleaning device; and when the mobile platform 100 is the non-autonomous mobile platform, the target direction may be set by a system or may be set manually. When the mobile platform 100 is the autonomous mobile platform, the mobile platform 100 includes a forward portion 111 and a rearward portion 110.

The perception system 120 includes a position determining device 121 located on the mobile platform 100, a buffer 122 located in the forward portion 111 of the mobile platform 100, cliff sensors 123 and sensing devices such as an ultrasonic sensor (not shown), an infrared sensor (not shown), a magnetometer (not shown), an accelerometer (not shown), a gyroscope (not shown), or an odometer (not shown), or the like located at a bottom of the mobile platform 100, for providing various position information and motion state information of the automatic cleaning device to the control system 130.

In order to describe behaviors of the automatic cleaning device more clearly, directions are defined as follows. The automatic cleaning device may travel on the ground by various combinations of movements relative to the following three mutually perpendicular axes defined by the mobile platform 100, i.e., a transversal axis X, a front and rear axis Y and a center vertical axis Z. A forward driving direction along the front and rear axis Y is designated as "forward", and a rearward driving direction along the front and rear axis Y is designated as "rearward". The transversal axis X is substantially along a direction of an axis center defined by a center point of a driving wheel assembly 141 extending between a right wheel and a left wheel of the automatic cleaning device. The automatic cleaning device may rotate around the X axis. It is referred to as "pitch up" when the forward portion of the automatic cleaning device is tilted upward and the rearward portion of the automatic cleaning device is tilted downward, and it is referred to as "pitch down" when the forward portion of the automatic cleaning device is tilted downward and the rearward portion thereof is tilted upward. In addition, the automatic cleaning device may rotate around the Z axis. In a forward direction of the automatic cleaning device, it is referred to as "turn right" when the automatic cleaning device is tilted to the right of the Y axis, and it is referred to as "turn left" when the automatic cleaning device is tilted to the left of the Y axis.

As shown in FIG. 2, cliff sensors 123 are provided at the bottom of the mobile platform 100 and in front and rear of the driving wheel assembly 141, respectively. The cliff sensors 123 are for preventing the automatic cleaning device from falling off when the automatic cleaning device retreats, so as to avoid a damage to the automatic cleaning device. The aforementioned "front" refers to a side same as a travelling direction of the automatic cleaning device, and the aforementioned "rear" refers to a side opposite to the travelling direction of the automatic cleaning device.

The position determining device 121 includes, but is not limited to, a camera and a laser distance sensor (LDS).

Various components in the perception system 120 may operate independently, or operate together to achieve a target function more accurately. The surface to be cleaned is identified by the cliff sensors 123 and the ultrasonic sensor to determine physical properties of the surface to be cleaned, including a surface medium, a degree of cleanliness, and the like, and determination may be made more accurately in combination with the camera, the LDS, or the like.

For example, the ultrasonic sensor may determine whether the surface to be cleaned is a carpet. If the ultrasonic sensor determines that the surface to be cleaned is made of a carpet material, the control system 130 controls the automatic cleaning device to perform cleaning in a carpet mode.

The forward portion 111 of the mobile platform 100 is provided with the buffer 122. During cleaning, when the driving wheel assembly 141 propels the automatic cleaning device to travel on the ground, the buffer 122 detects one or more events (or objects) in a travelling path of the automatic cleaning device via a sensor system, e.g., an infrared sensor, and the automatic cleaning device may control the driving wheel assembly 141 based on the event (or object), such as obstacle or wall, detected by the buffer 122 to cause the automatic cleaning device to respond to the event (or object), for example, to move away from the obstacle.

The control system 130 is disposed on a main circuit board in the mobile platform 100, and includes a computing processor such as a central processing unit or an application processor, that communicates with a non-transitory memory such as a hard disk, a flash memory or a random-access memory. The application processor is configured to receive environmental information sensed by the plurality of sensors and transmitted from the perception system 120, to draw a simultaneous map of an environment where the automatic cleaning device is located using a positioning algorithm e.g., simultaneous localization and mapping (SLAM), based on obstacle information fed back by the LDS, and to autonomously determine a travelling path based on the environmental information and the environmental map, and then to control the driving system 140 to perform operations, such as travelling forward, travelling backward, and/or steering based on the autonomously determined travelling path. Further, the control system 130 may also determine whether to activate the cleaning module 150 to perform a cleaning operation based on the environmental information and the environmental map.

Specifically, the control system 130 may, based on distance information or speed information which are fed back by the buffer 122, the cliff sensors 123 and the sensing devices such as the ultrasonic sensor, the infrared sensor, the magnetometer, the accelerometer, the gyroscope or the odometer, comprehensively determine a current operation state of the ground sweeping robot, such as crossing a doorsill, getting on a carpet, locating at an edge of a cliff, being stuck from above or below, having a full dust box or being picked up. The control system 130 may also give specific next-step action strategies for different situations, so that the operation of the automatic cleaning device is more in line with requirements of an owner and provides better user experience. Further, the control system can plan the most efficient and reasonable cleaning path and cleaning mode based on the simultaneous map drawn by the SLAM, thereby greatly improving the cleaning efficiency of the automatic cleaning device.

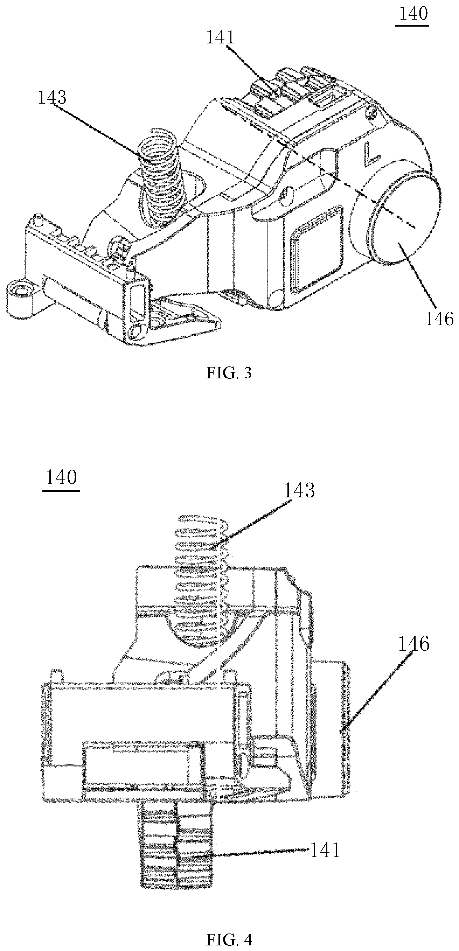

The driving system 140 may execute a driving command based on specific distance and angle information, such as x, y, and θ components, to manipulate the automatic cleaning device to travel across the ground. FIG. 3 and FIG. 4 are an oblique view and a front view of a driving wheel assembly 141 on a side according to an embodiment of the present disclosure, respectively. As shown in the figures, the driving system 140 includes the driving wheel assembly 141, and may control a left wheel and a right wheel simultaneously. In order to control the motion of the automatic cleaning device more precisely, the driving system 140 preferably includes a left driving wheel assembly and a right driving wheel assembly. The left driving wheel assembly and the right driving wheel assembly are arranged symmetrically along a transversal axis defined by the mobile platform 100. The driving wheel assembly includes a housing and a connecting frame, and a driving motor 146 is disposed in each driving wheel assembly. The driving motor 146 is located outside the driving wheel assembly 141, an axis center of the driving motor 146 is located within a sectional projection of the driving wheel assembly, and the driving wheel assembly 141 may also be connected to a circuit for measuring a driving current and the odometer.

In order for the automatic cleaning device to move on the ground more stably or have a higher movement ability, the automatic cleaning device may include one or more steering assemblies 142. One of the steering assemblies 142 may be a driven wheel or a driving wheel, and structurally includes but is not limited to a universal wheel. The steering assembly 142 may be located in front of the driving wheel assembly 141.

The driving motor 146 provides power for rotation of the driving wheel assembly 141 and/or the steering assembly 142.

The driving wheel assembly 141 may be detachably connected to the mobile platform 100 to facilitate assembly, disassembly and maintenance. The driving wheel may have an offset drop suspension system which movably fastened, e.g., rotatably attached, to the mobile platform 100 of the automatic cleaning device, and maintain contact and traction with the ground by an elastic element 143 such as a tension spring or a compression spring with a certain grounding force; meanwhile, the cleaning module 150 of the automatic cleaning device is also in contact with the surface to be cleaned with a certain pressure.

The energy system 160 includes a rechargeable battery, such as a nickel-hydride battery and a lithium battery. The rechargeable battery may be connected with a charging control circuit, a battery pack charging temperature detecting circuit and a battery undervoltage monitoring circuit, wherein the charging control circuit, the battery pack charging temperature detecting circuit and the battery undervoltage monitoring circuit are then connected to a single-chip microcomputer control circuit. A host is connected to a charging pile through a charging electrode disposed on a side of or below a body for charging.

The human-computer interaction system 170 includes buttons that are on a panel of the host and used by a user to select functions. The human-computer interaction system 170 may further include a display screen and/or an indicator light and/or a horn. The display screen, the indicator light or the horn presents a current state or function item of the automatic cleaning device to the user. The human-computer interaction system 170 may further include a mobile client program. For a route navigation type cleaning apparatus, a mobile client may present a map of the environment where the apparatus is located and a position of the apparatus to the user, which may provide richer and more user-friendly function items to the user.

The cleaning module 150 may include a dry cleaning module 151 and/or a wet cleaning module 400.

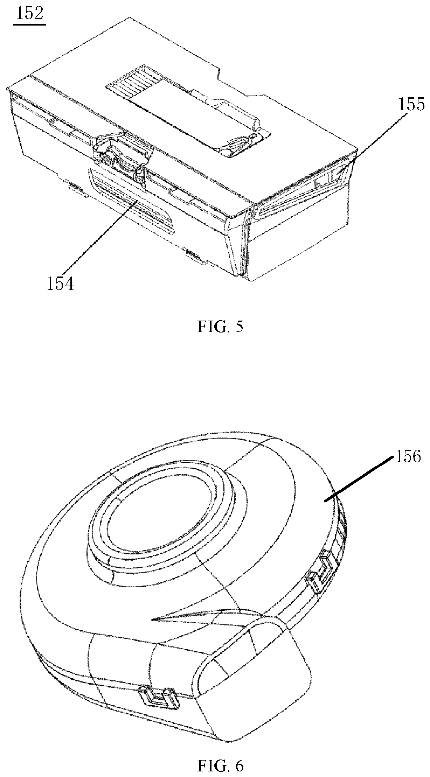

As shown in FIGs. 5-8, the dry cleaning module 151 includes a rolling brush, a dust box, a blower and an air outlet. The rolling brush having a certain interference with the ground sweeps up garbage on the ground and rolls up the garbage to the front of a dust suction inlet between the rolling brush and the dust box, and then the garbage is sucked into the dust box by air having a suction force, which is generated by the blower and passes through the dust box. A dust removal capacity of the ground sweeping robot may be characterized by a dust pickup efficiency (DPU) of the garbage. The DPU is affected by a structure and material of the rolling brush, by a utilization rate of the air in an air channel formed by the dust suction inlet, the dust box, the blower, the air outlet and connecting components between the four, and by a type and power of the blower, which is a complex systematic design problem. Compared to an ordinary plug-in vacuum cleaner, the improvement of the dust removal capacity is more meaningful for an automatic cleaning device with limited energy because the improvement of the dust removal capacity directly and effectively reduces requirements for energy. For example, a previous cleaning apparatus that may clean 80 square meters of the ground on a single charge may be evolved to clean 180 square meters or more on a single charge. Furthermore, the service life of the battery with the reduced number of charging times will also be greatly increased, so that the frequency of replacing the battery by the user will also be decreased. More intuitively and importantly, the improvement of the dust removal capacity is the most obvious and important user experience, as the user will directly come to a conclusion of whether the thorough cleaning is achieved. The dry cleaning module may further include a side brush 157 having a rotary shaft angled relative to the ground, for moving debris into a region of the rolling brush of the cleaning module 150.

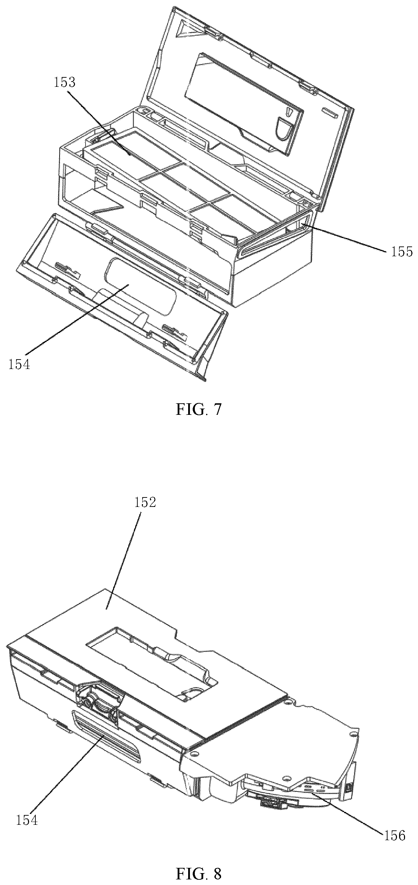

FIG. 5 is a schematic structural diagram of a dust box 152 in the dry cleaning module, FIG. 6 is a schematic structural diagram of a blower 156 in the dry cleaning module, FIG. 7 is a schematic diagram of the dust box 152 in an open state, and FIG. 8 is a schematic diagram of the dust box and the blower in an assembled state.

The rolling brush having a certain interference with the ground sweeps up garbage on the ground and rolls up the garbage to the front of the dust suction inlet 154 between the rolling brush and the dust box 152, and then the garbage is sucked into the dust box 152 by air having a suction force, which is generated by the blower 156 and passes through the dust box 152. The garbage is isolated inside the dust box 152 close to the dust suction inlet 154 by a filter 153, and the filter 153 completely isolates the dust suction inlet from the air outlet, so that the filtered air enters the blower 156 through the air outlet 155.

Typically, the dust suction inlet 154 of the dust box 152 is located in front of the automatic cleaning device, the air outlet 155 is located on a side of the dust box 152, and an air inlet of the blower 156 is docked with the air outlet of the dust box.

A front panel of the dust box 152 may be opened for cleaning the garbage in the dust box 152.

The filter 153 is detachably connected to a body of the dust box 152 to facilitate detachment and cleaning of the filter.

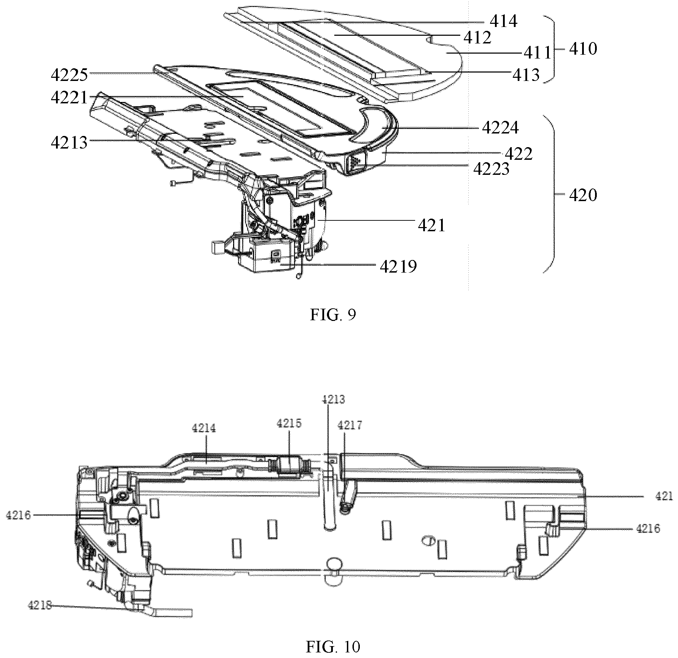

As shown in FIGs. 9-11, the wet cleaning module 400 according to the present disclosure is configured to clean at least a part of the operating surface by means of wet cleaning. The wet cleaning module 400 includes a cleaning head 410 and a driving unit 420. The cleaning head 410 is used for cleaning at least a part of the operating surface, and the driving unit 420 is used for driving the cleaning head 410 to reciprocate along a target surface, the target surface being a part of the operating surface. The cleaning head 410 reciprocates along a surface to be cleaned, and a surface of the cleaning head 410 in contact with the surface to be cleaned is provided with a cleaning cloth or a cleaning plate, which generates a high-frequency frictional force with the surface to be cleaned through reciprocating motion, thereby removing stains on the surface to be cleaned. The reciprocating motion may be a repeated motion along any one or more directions within the operating surface, or may be a vibrating motion perpendicular to the operating surface, which is not strictly limited.

As shown in FIG. 9, the driving unit 420 includes: a driving platform 421 connected to a bottom surface of the mobile platform 100 for providing a driving force; and a supporting platform 422 detachably connected to the driving platform 421, for supporting the cleaning head 410 and being able to raise and lower under the driving of the driving platform 421.

A raising and lowering module is provided between the cleaning module 150 and the mobile platform 100, so that the cleaning module 150 may be in better contact with the surface to be cleaned, or different cleaning strategies may be used for surfaces to be cleaned made of different materials.

The dry cleaning module 151 may be connected to the mobile platform 100 by a passive raising and lowering module. When the cleaning apparatus encounters an obstacle, the dry cleaning module 151 may pass the obstacle more easily through the raising and lowering module.

The wet cleaning module 400 may be connected to the mobile platform 100 by an active raising and lowering module. When the wet cleaning module 400 does not participate in the operation temporarily, or when a surface to be cleaned cannot be cleaned by the wet cleaning module 400, the wet cleaning module 400 is raised by the active raising and lowering module and separated from the surface to be cleaned, so as to realize the change of cleaning means.

As shown in FIGs. 10-11, the driving platform 421 includes: a motor 4211 disposed on a side of the driving platform 421 close to the mobile platform 100 and for outputting power through a motor output shaft; a driving wheel 4212 connected to the motor output shaft and having an asymmetric structure; and a vibrating member 4213 disposed on a side of the driving platform 421 opposite to the motor 4211 and connected to the driving wheel 4212 to reciprocate under the asymmetrical rotation of the driving wheel 4212.

The driving platform 421 may further include a driving wheel and a gear mechanism. The gear mechanism 235 may be connected to the motor 4211 and the driving wheel 4212. The motor 4211 may directly drive the driving wheel 4212 to rotate, or may indirectly drive the driving wheel 4212 to rotate through the gear mechanism. Those of ordinary skills in the art may understand that the gear mechanism may be one gear, or may be a gear set composed of a plurality of gears.

The motor 4211 simultaneously transmits, through a power transmission device, power to the cleaning head 410, the driving platform 421, the supporting platform 422, a water delivery mechanism, a water tank, and the like. The energy system 160 provides power and energy for the motor 4211 and is entirely controlled by the control system 130. The power transmission device may be a gear drive, a chain drive, a belt drive, or may be a worm gear, or the like.

The motor 4211 has a forward output mode and a reverse output mode. In the forward output mode, the motor 4211 rotates in the forward direction; and in the reverse output mode, the motor 4211 rotates in the reverse direction. In the forward output mode of the motor 4211, the motor 4211 simultaneously drives, through the power transmission device, the cleaning head 410 and the water delivery mechanism in the wet cleaning assembly 400 to move synchronously.

Further, the driving platform 421 further includes a connecting rod 4214 extending along an edge of the driving platform 421 and connecting the driving wheel 4212 and the vibrating member 4213, so that the vibrating member 4213 extends to a preset position. An extension direction of the vibrating member 4213 is perpendicular to the connecting rod 4214.

The motor 4211 is connected to the driving wheel 4212, the vibrating member 4213, the connecting rod 4214 and a vibration buffering device 4215 through the power transmission device. When the wet cleaning assembly 400 is activated, the motor 4211 is started to rotate forward to drive the connecting rod 4214 through the driving wheel 4212 to reciprocate along the surface of the driving platform 421; meanwhile, the vibration buffering device 4215 drives the vibrating member 4213 to reciprocate along the surface of the driving platform 421, the vibrating member 4213 drives a cleaning substrate 4221 to reciprocate along the surface of the supporting platform 422, and the cleaning substrate 4221 drives a movable region 412 to reciprocate along the surface to be cleaned. At this time, a clean water pump enables clean water to flow out of a clean water tank and sprinkles the clean water on the cleaning head 410 through a water discharging device 4217, and the cleaning head 410 reciprocates to clean the surface to be cleaned.

The cleaning intensity/efficiency of the automatic cleaning device may also be automatically and dynamically adjusted according to an operation environment of the automatic cleaning device. For example, the automatic cleaning device may achieve dynamic adjustment according to physical information of the surface to be cleaned detected by the perception system 120. For example, the perception system 120 may detect the flatness of the surface to be cleaned, a material of the surface to be cleaned, the existence of oil and dust, and other information, and transmit the information to the control system 130 of the automatic cleaning device. Correspondingly, the control system 130 may instruct the automatic cleaning device to automatically and dynamically adjust a rotational speed of the motor and a transmission ratio of the power transmission device according to the operation environment of the automatic cleaning device, so as to adjust a preset reciprocating period of the reciprocating motion of the cleaning head 410.

For example, when the automatic cleaning device operates on a flat ground, the preset reciprocating period may be automatically and dynamically adjusted to be longer, and a water volume of the water pump may be automatically and dynamically adjusted to be smaller; and when the automatic cleaning device operates on a less flat ground, the preset reciprocating period may be automatically and dynamically adjusted to be shorter, and the water volume of the water pump may be automatically and dynamically adjusted to be larger. This is because it is easier to clean the flat ground than the less flat ground, and thus the reciprocating motion of the cleaning head 410 at a higher speed (i.e., a higher frequency) and in the larger water volume is needed for cleaning an uneven ground.

For another example, when the automatic cleaning device operates on a table, the preset reciprocating period may be automatically and dynamically adjusted to be longer, and the water volume of the water pump may be automatically and dynamically adjusted to be smaller; and when the automatic cleaning device 100 operates on a ground, the preset reciprocating period may be automatically and dynamically adjusted to be shorter, and the water volume of the water pump may be automatically and dynamically adjusted to be larger. This is because the table has less dust and oil compared to the ground, the material of the table is also easier to clean, and thus, the table can be cleaned with the fewer number of reciprocating motions of the cleaning head 410 and the relatively smaller water volume of the water pump.

The supporting platform 422 includes a cleaning substrate 4221 freely and movably disposed on the supporting platform 422 and reciprocating under the vibration of the vibrating member 4213. Optionally, the cleaning substrate 4221 includes an assembly notch (not shown) disposed at a position in contact with the vibrating member 4213. When the supporting platform 422 is connected to the driving platform 421, the vibrating member 4213 is assembled to the assembly notch, so that the cleaning substrate 4221 may reciprocate synchronously along with the vibrating member 4213.

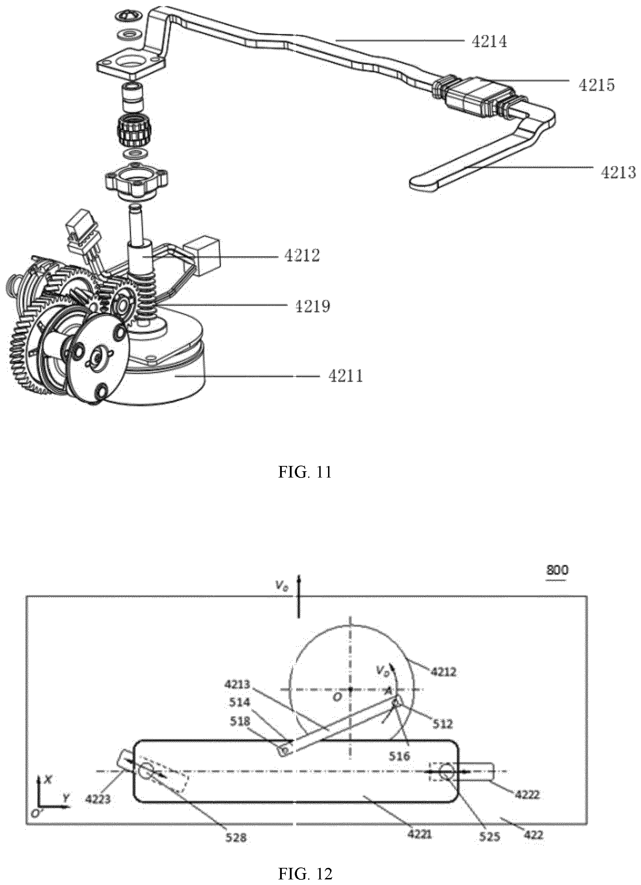

FIG. 12 shows another cleaning head driving mechanism 800 based on a crank slider mechanism according to a plurality of embodiments of the present disclosure. The driving mechanism 800 may be applied to the driving platform 421. The driving mechanism 800 includes a driving wheel 4212, a vibrating member 4213, a cleaning substrate 4221, a slot 4222 (a first slot) and a slot 4223 (a second slot).

The slots 4222 and 4223 are formed in the supporting platform 422. Both ends of the cleaning substrate 4221 include a slider 525 (a first slider) and a slider 528 (a second slider), respectively. Each of the sliders 525 and 528 is a protrusion at each of both ends of the cleaning substrate 4221. The slider 525 is inserted into the slot 4222 and may slide along the slot 4222, and the slider 528 is inserted into the slot 4223 and may slide along the slot 4223. In some embodiments, the slot 4222 and the slot 4223 are on the same line. In some embodiments, the slot 4222 and the slot 4223 are not on the same line. In some embodiments, the slot 4222 and the slot 4223 extend along the same direction. In some embodiments, an extension direction of the slot 4222 and an extension direction of the slot 4223 are the same as that of the cleaning substrate 4221. In some embodiments, the extension direction of the slot 4222 and the extension direction of the slot 4223 are different from that of the cleaning substrate 4221. In some embodiments, the extension direction of the slot 4222 is different from that of the slot 4223. For example, as shown in FIG. 12, the extension direction of the slot 4222 is the same as that of the cleaning substrate 4221, and the extension direction of the slot 4223 is at a certain angle with the extension direction of the slot 4222.

The vibrating member 4213 includes a rotation end 512 and a sliding end 514. The rotation end 512 is connected to the driving wheel 4212 through a first pivot 516, and the sliding end 514 is connected to the cleaning substrate 4221 through a second pivot 518.

A rotation center of the driving wheel 4212 is a point O, and a pivoting center of the first pivot 516 is a point A. The point O and the point A do not coincide, and the distance between the point O and the point A is a preset distance d.

When the driving wheel 4212 rotates, the point A also performs a circular rotary motion accordingly. Correspondingly, the rotation end 512 follows the point A to perform a circular rotary motion, and the sliding end 514 drives the cleaning substrate 4221 to perform a sliding motion through the second pivot 518. Correspondingly, the slider 525 of the cleaning substrate 4221 linearly reciprocates along the slot 4222, and the slider 528 linearly reciprocates along the slot 4223. In FIG. 4, a moving speed of the mobile platform 210 is V0, and a moving direction thereof is a target direction. According to some embodiments, when the slot 4223 and the slot 4222 are approximately perpendicular to the direction of the moving speed V0 of the mobile platform 210 respectively, an overall displacement of the cleaning substrate 4221 is substantially perpendicular to the target direction. According to some other embodiments, when any one of the slot 4223 and the slot 4222 forms an angle other than 90 degrees with the target direction, the overall displacement of the cleaning substrate 4221 includes both a component perpendicular to the target direction and a component parallel to the target direction.

Further, a vibration buffering device 4215 is included, which is disposed on the connecting rod 4214 for reducing vibration in a specific direction. In this embodiment, the vibration buffering device 4215 is used for reducing the vibration in a direction of a movement component perpendicular to the target direction of the automatic cleaning device.

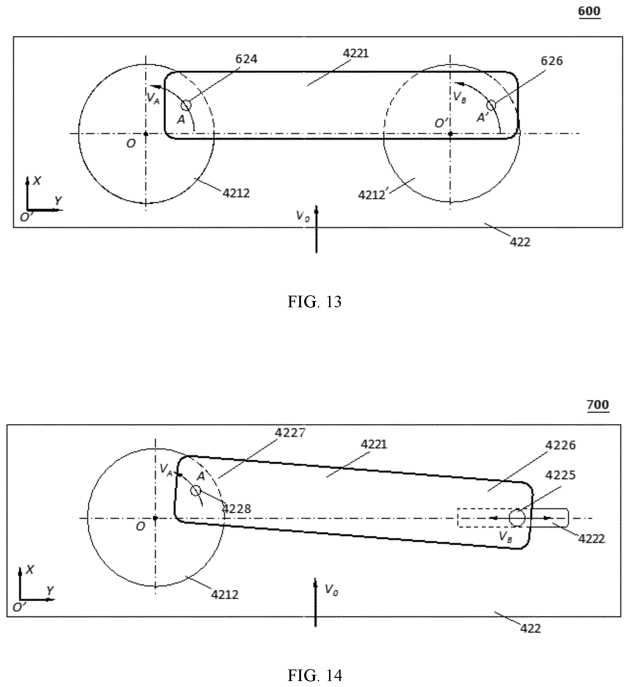

FIG. 13 shows another cleaning head driving mechanism 600 based on a double-crank mechanism according to a plurality of embodiments of the present disclosure. The driving mechanism 600 may be applied to the driving platform 421. The driving mechanism 600 includes a driving wheel 4212 (a first driving wheel), a driving wheel 4212' (a second driving wheel) and a cleaning substrate 4221.

The cleaning substrate 4221 has two ends, a first end of the cleaning substrate 4221 is connected to the driving wheel 4212 through a pivot 624 (a first pivot), and a second end of the cleaning substrate 4221 is connected to the driving wheel 4212' through a pivot 626 (a second pivot). A rotation center of the driving wheel 4212 is a point O, and a pivoting center of the pivot 624 is a point A. The point O and the point A do not coincide, and the distance between the point O and the point A is a preset distance d. A rotation center of the driving wheel 236 is a point O', and a pivoting center of the pivot 626 is point A'. The point O' and the point A' do not coincide, and the distance between the point O' and the point A' is a preset distance d. In some embodiments, the point A, the point A', the point O, and the point O' are located on the same plane. Therefore, the driving wheel 4212, the driving wheel 4212' and the cleaning substrate 4221 may form a double-crank mechanism (or a parallelogram mechanism), wherein the cleaning substrate 4221 acts as a coupling rod, and the driving wheels 4212 and 4212' act as two cranks.

Further, a vibration buffering device 4215 is included, which is disposed on the connecting rod 4214 for reducing vibration in a specific direction. In this embodiment, the vibration buffering device 4215 is used for reducing the vibration in a direction of a movement component perpendicular to the target direction of the automatic cleaning device.

FIG. 14 shows a driving mechanism 700 based on a crank slider mechanism according to a plurality of embodiments of the present disclosure. The driving mechanism 700 may be applied to the driving platform 421. The driving mechanism 700 includes a driving wheel 4212, a cleaning substrate 4221 and a slot 4222.

The slot 4222 is formed in the supporting platform 422. The cleaning substrate 4221 includes a rotation end 4227 and a sliding end 4226. The rotation end 4227 is connected to the driving wheel 4212 through a pivot 4228. A rotation center of the driving wheel 4212 is a point O, and a pivoting center of the pivot 4228 of the rotation end is a point A. The point O and the point A do not coincide, and the distance between the point O and the point A is a preset distance d. The sliding end 4226 includes a slider 4225. The slider 4225 is a protrusion on the sliding end 4226. The slider 4225 is inserted into the slot 4222 and may slide along the slot 4222. Therefore, the driving wheel 4212, the cleaning substrate 4221, the slider 4225 and the slot 4222 constitute the crank slider mechanism.

When the driving wheel 4212 rotates, the point A performs a circular rotary motion accordingly. Correspondingly, the rotation end 4227 of the cleaning substrate 4221 follows the point A to perform a circular rotary motion, and the slider 4225 also slides in the slot 4222 and reciprocates linearly. As a result, the cleaning substrate 4221 starts to reciprocate. According to some embodiments, the slot 4222 is approximately perpendicular to a direction of the target direction of the moving speed of the mobile platform. Therefore, the linear motion of the sliding end 4226 includes a component perpendicular to the target direction, and the circular rotation motion of the rotation end 4227 includes both a component perpendicular to the target direction and a component parallel to the target direction.

In FIG. 14, a moving speed of the mobile platform is V0, and a moving direction thereof is a target direction, and the slot 4222 is approximately perpendicular to the target direction. At this time, the reciprocating motion of the cleaning substrate 4221 as a whole includes both a movement component parallel to the target direction of the automatic cleaning device and a movement component perpendicular to the target direction of the automatic cleaning device.

Further, a vibration buffering device 4215 is included, which is disposed on the connecting rod 4214 for reducing vibration in a specific direction. In this embodiment, the vibration buffering device 4215 is used for reducing the vibration in a direction of a movement component perpendicular to the target direction of the automatic cleaning device.

Further, the supporting platform 422 further includes an elastic detaching button 4229 disposed on at least one side of the supporting platform 422 for detachably connecting the supporting platform 422 to pawls 4216 of the driving platform 421. At least one assembly region 4224 is disposed on the supporting platform 422 for assembling the cleaning head 410. The assembly region 4224 may be formed of an adhesive material with an adhesive layer.

As shown in FIG. 9, the cleaning head 410 includes a movable region 412 connected to the cleaning substrate 4221 to reciprocate along the surface to be cleaned under the driving of the cleaning substrate 4221. The movable region 412 is disposed at a substantially central position of the cleaning head 410. An adhesive layer is provided on a side of the movable region 412 connected to the cleaning substrate 4221, and the movable region 412 is connected to the cleaning substrate 4221 through the adhesive layer.

Optionally, the cleaning head 410 further includes a fixed region 411 connected to a bottom of the supporting platform 422 through the at least one assembly region 4224. The fixed region 411 cleans at least a part of the operating surface along with the movement of the supporting platform 422.

Further, the cleaning head 410 further includes a flexible connecting portion 413 disposed between the fixed region 411 and the movable region 412 for connecting the fixed region 411 and the movable region 412. The cleaning head 410 further includes a sliding fastener 414 extending along an edge of the cleaning head 410 and detachably mounted at an engagement position 4225 of the supporting platform 422.

As shown in FIG. 9, the cleaning head 410 may be made of a material with certain elasticity, and is fixed to the surface of the supporting platform 422 through the adhesive layer so as to reciprocate. The cleaning head 410 is always in contact with the surface to be cleaned during operation.

The water delivery mechanism includes a water discharging device 4217 that may be directly or indirectly connected to a cleaning liquid outlet of a water tank (not shown), that is, a liquid outlet of the clean water tank. The cleaning liquid may flow to the water discharging device 4217 via the cleaning liquid outlet of the water tank, and may be evenly coated on the surface to be cleaned through the water discharging device. A connecting member (not shown) may be provided on the water discharging device, and the water discharging device is connected to the cleaning liquid outlet of the water tank through the connecting member. The water discharging device is provided with a distribution port which may be a continuous opening or a combination of several discontinuous small openings, and several nozzles may be provided at the distribution port. The cleaning liquid flows to the distribution port via the cleaning liquid outlet of the water tank and the connecting member of the water discharging device, and is evenly coated on the operating surface via the distribution port.

The water delivery mechanism may further include a clean water pump 4219 and/or a clean water pump pipe 4218. The clean water pump 4219 may be communicated with the cleaning liquid outlet of the water tank directly, or communicated with the cleaning liquid outlet of the water tank through the clean water pump pipe 4218.

The clean water pump 4219 may be connected to the connecting member of the water discharging device, and configured to pump the cleaning liquid from the water tank to the water discharging device. The clean water pump may be a gear pump, a vane pump, a plunger pump, a peristaltic pump, or the like.

The water delivery mechanism draws the cleaning liquid out of the clean water tank through the clean water pump 4219 and the clean water pump pipe 4218, and transports the cleaning liquid to the water discharging device. The water discharging device 4217 may be a sprinkler head, a drip hole, a wet cloth, or the like, and may uniformly spread water on the cleaning head so as to wet the cleaning head and the surface to be cleaned. Stains on the wetted surface to be cleaned can be cleaned more easily. In the wet cleaning assembly 400, the power/flow rate of the clean water pump may be adjusted.

In the above wet cleaning module, by adding the driving unit and the vibration region, the cleaning head may reciprocate to repeatedly clean the surface to be cleaned. Therefore, in a motion trajectory of the automatic cleaning device, a region may be cleaned several times by the automatic cleaning device passing the region just one time, thereby greatly enhancing the cleaning effect. The cleaning effect is obvious especially for a region with more stains.

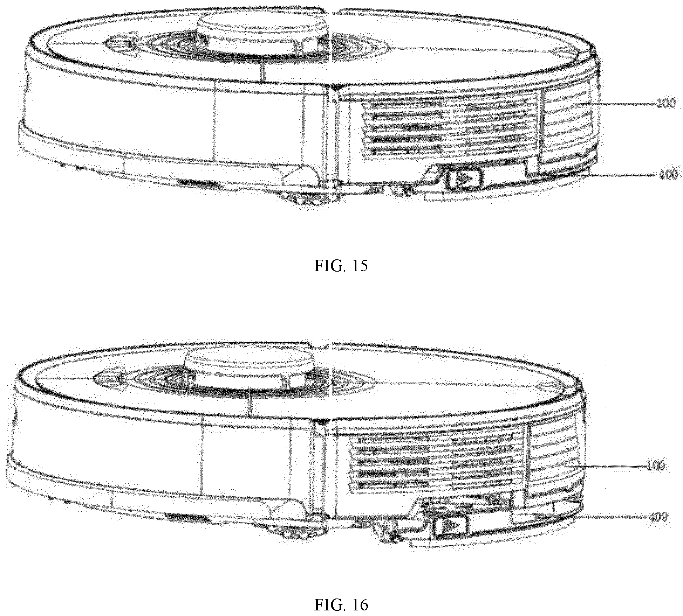

According to a example embodiment of the present invention, the present invention provides an automatic cleaning device which is capable of raising and lowering, including a moving platform 100 configured to automatically move on an operating surface; and a wet cleaning module 400 movably connected to the mobile platform 100 through a four-link raising and lowering structure 500, and configured to clean at least a part of the operating surface by means of wet cleaning. The four-link raising and lowering structure 500 is a parallelogram structure for switching the wet cleaning module 400 between a raised state and a lowered state. In the raised state, the wet cleaning module 400 leaves the operating surface, as shown in FIG. 15; and in the lowered state, the wet cleaning module 400 is attached to the operating surface, as shown in FIG. 16.

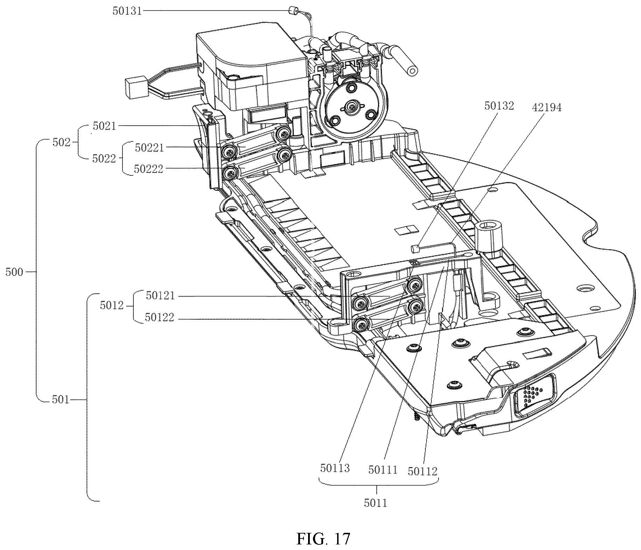

As shown in FIGs. 17-18, the four-link raising and lowering structure 500 includes: a first connecting end 501 for providing active power to switch the wet cleaning module 400 between the raised state and the lowered state; and a second connecting end 502 disposed opposite to the first connecting end 501 and rotating under the action of the active power. The first connecting end 501 and the second connecting end 502 are located on both sides of the wet cleaning module 400 respectively to raise or lower the wet cleaning module 400 by stably providing a raising or lowering force.

Specifically, the first connecting end 501 includes a first bracket 5011 fixedly connected to the bottom of the mobile platform 100. The first bracket 5011 is roughly shaped like a Chinese character " 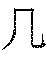 ", and includes a cross beam 50111, a first longitudinal beam 50114 and a second longitudinal beam 50115. A tail end of each of the first longitudinal beam 50114 and the second longitudinal beam 50115 is fixedly connected to the mobile platform 100 through a bolt to provide a supporting force when the wet cleaning module 400 is raised and lowered.

The first connecting end 501 further includes a first connecting rod pair 5012, one end of the first connecting rod pair 5012 is rotatably connected to the first bracket 5011, and the other end of the first connecting rod pair 5012 is rotatably connected to the wet cleaning module 400. The first connecting rod pair 5012 may be of a hollowed-out structure, which can reduce an overall weight of raising and lowering ends.

Optionally, the first connecting rod pair 5012 includes a first connecting rod 50121 and a second connecting rod 50122 which are arranged in parallel. A first end of each of the first connecting rod 50121 and the second connecting rod 50122 is rotatably connected to the first longitudinal beam 50114 through a movable stud, and a second end of each of the first connecting rod 50121 and the second connecting rod 50122 is rotatably connected to the wet cleaning module 400 through a movable stud. For example, both ends of each of the first connecting rod 50121 and the second connecting rod 50122 are provided with a through hole having a diameter greater than that of the movable stud, respectively, so that the movable stud may rotate freely within the through hole, and is fixedly connected to the first longitudinal beam 50114 through the through hole. When the motor 4211 provides a pulling force to the first ends through the cable, the first ends of the first connecting rod 50121 and the second connecting rod 50122 simultaneously rotate around the movable studs at the first ends, and the second ends thereof are raised under the pulling force of the cable, so that the wet cleaning module 400 is raised. When the motor 4211 releases the pulling force to the first ends through the cable, the first ends of the first connecting rod 50121 and the second connecting rod 50122 simultaneously rotate reversely around the movable studs at the first ends, and the second ends thereof are lowered under the action of gravity, so that the wet cleaning module 400 is lowered.

The raising and lowering structure 500 further includes a cable 42194 for providing a pulling force to rotate the first connecting rod pair 5012 within a preset angle. The cable 42194 includes a cable motor terminal 50131 connected to the driving unit 420, for example, wound on the gear connected to the motor output shaft to extend and retract under the rotation of the motor; and a cable bracket terminal 50132 connected to the first bracket 5011. The motor raises or lowers the second ends of the first connecting rod 50121 and the second connecting rod 50122 through the cable 42194.

Optionally, the first bracket 5011 further includes: a slot 50112 extending along a surface of the cross beam 50111; and a snapping hole 50113 traveling through the cross beam 50111 and disposed at an extension end of the slot 50112 for accommodating and snapping the cable bracket terminal 50132. The cable 42194 is connected to the first ends of the first connecting rod 50121 and the second connecting rod 50122 through the slot 50112 and the snapping hole 50113. The slot 50112 can restrict a moving direction of the cable to ensure the stability of the raising and lowering module, and the width of the slot should match the thickness of the cable.

As shown in FIG. 17, the second connecting end 502 includes: a second bracket 5021 fixedly connected to the bottom of the mobile platform 100; and a second connecting rod pair 5022, one end of which is rotatably connected to the second bracket 5021, and the other end of which is rotatably connected to the wet cleaning module 400. The second connecting rod pair 5022 rotates along with the rotation of the first connecting rod pair 5012. The second connecting rod pair 5022 may be of a hollowed-out structure, which can reduce the overall weight of raising and lowering ends.

Specifically, the second connecting rod pair 5022 includes a third connecting rod 50221 and a fourth connecting rod 50222 which are arranged in parallel. A first end of each of the third connecting rod 50221 and the fourth connecting rod 50222 is rotatably connected to the second bracket 5021 through a movable stud, and a second end of each of the third connecting rod 50221 and the fourth connecting rod 50222 is rotatably connected to the wet cleaning module 400 through a movable stud. For example, both ends of each of the third connecting rod 50221 and the fourth connecting rod 50222 are provided with a through hole having a diameter greater than that of the movable stud, respectively, so that the movable stud may rotate freely within the through hole, and is fixedly connected to the second bracket 5021 and the wet cleaning module 400 through the through hole. When the first connecting end 501 rotates under the driving of the motor 4211, the first ends of the third connecting rod 50221 and the fourth connecting rod 50222 simultaneously rotate around the movable studs at the first ends, and the second ends of the third connecting rod 50221 and the fourth connecting rod 50222 simultaneously rotate around the movable studs at the second ends, so that the wet cleaning module 400 is raised. When the pulling force to the first connecting end 501 is released, the third connecting rod 50221 and the fourth connecting rod 50222 simultaneously rotate reversely around the movable studs and are lowered under the action of gravity, so that the wet cleaning module 400 is lowered.

Through the four-link raising and lowering structure disposed between the wet cleaning module and the mobile platform, the wet cleaning module may be raised and lowered relative to the mobile platform. When a ground mopping task is performed, the wet cleaning module is lowered to enable the wet cleaning module to be in contact with the ground; and when the ground mopping task is completed, the wet cleaning module is raised to separate the wet cleaning module from the ground, thereby avoiding the increased resistance due to the existence of the cleaning module when the cleaning apparatus moves freely on the surface to be cleaned.

In cooperation with a surface medium sensor and other sensors that can detect a surface type of the surface to be cleaned, the raising and lowering module enables the wet cleaning module to perform a cleaning operation according to different surfaces to be cleaned. For example, the raising and lowering module raises the wet cleaning module in case of a carpet surface, and lowers the wet cleaning module in case of a floor surface, a floor tile surface or the like, so as to perform cleaning. Thus, a more comprehensive cleaning effect is achieved.

For a region with different surface mediums, the automatic cleaning device needs to control the wet cleaning module to raise or lower according to different surface mediums during cleaning. For example, it needs to raise the wet cleaning module when cleaning the carpet surface; and lower the wet cleaning module when cleaning the floor surface. If reciprocated cleaning is performed along a zigzag route, the automatic cleaning device needs to control the wet cleaning module to raise and lower frequently, which will spend more time in the cleaning process and shorten the service life of the automatic cleaning device.

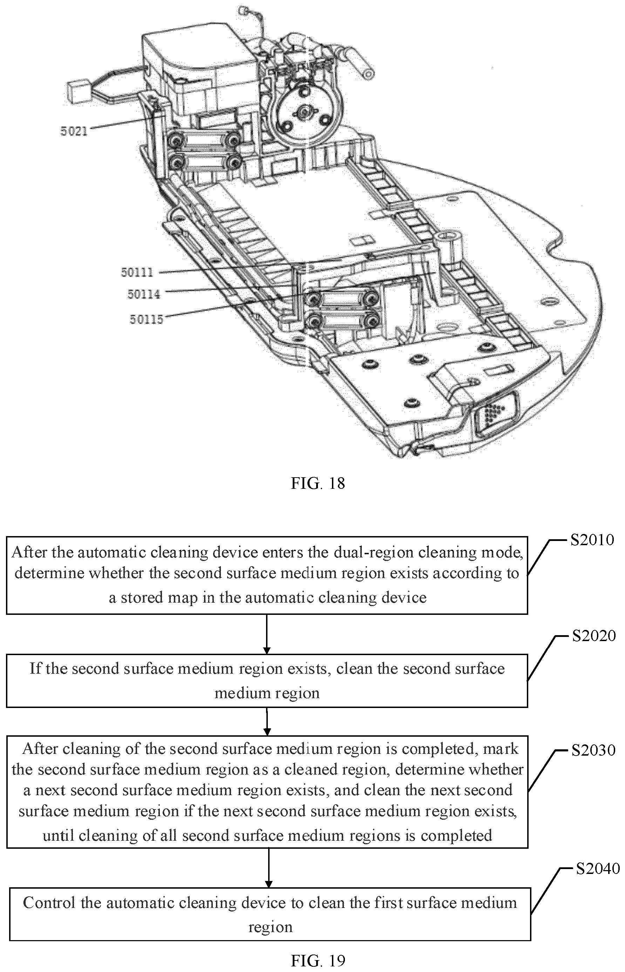

Based on this, with reference to FIG. 19, a flowchart of a cleaning method for an automatic cleaning device according to an exemplary embodiment of the present disclosure is shown. The cleaning method for the automatic cleaning device is used for a dual-region cleaning mode including cleaning of a first surface medium region and a second surface medium region, and the method may specifically include the following steps:

In step S2010, after the automatic cleaning device enters the dual-region cleaning mode, whether the second surface medium region exists is determined according to a stored map in the automatic cleaning device.

In step S2020, if the second surface medium region exists, the second surface medium region is cleaned.

In step S2030, after cleaning of the second surface medium region is completed, the second surface medium region is marked as a cleaned region, whether a next second surface medium region exists is determined, and the next second surface medium region is cleaned if the next second surface medium region exists, until cleaning of all second surface medium regions is completed.

In step S2040, the automatic cleaning device is controlled to clean the first surface medium region.

In the cleaning method for the automatic cleaning device according to the exemplary embodiment of the present disclosure, when the automatic cleaning device cleans the first surface medium region and the second surface medium region, the automatic cleaning device can be controlled to clean the second surface medium region first, and then clean the first surface medium region after cleaning of the second surface medium region is completed, thereby reducing the number of times for the automatic cleaning device to control a wet cleaning module to be raised and lowered, improving the cleaning efficiency and also prolonging the service life of the automatic cleaning device.

The first surface medium here is one or more of floor surface mediums, such as a wooden floor, a ceramic tile or a cement surface; and the second surface medium is one or more of floor surface mediums different from the first surface medium, such as carpet.

Now, in combination with the cleaning method for the automatic cleaning device according to the exemplary embodiment of the present disclosure, the whole cleaning process after one automatic cleaning device enters a room containing two medium regions will be described.

Firstly, after entering the room, the automatic cleaning device will firstly enter a wall-following cleaning mode, in which the automatic cleaning device may acquire a room map. If the automatic cleaning device contains a stored map, it is needed to compare the room map with the stored map. If the matching degree between the two is relatively high, for example, the matching ratio is 90% or more, the room is cleaned based on the stored map.

However, if the matching degree is not enough, for example, the matching ratio is below 90%, it is needed to redraw the room map and draw the second surface medium region in the room.

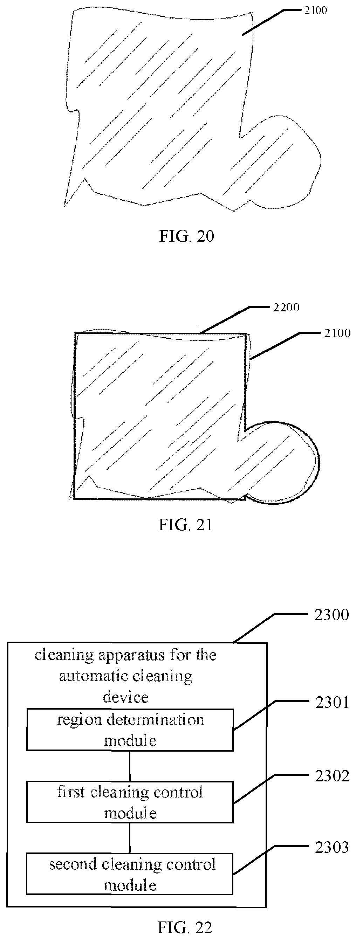

In an exemplary embodiment of the present disclosure, a method for drawing the second surface medium region may include: scanning a boundary of the second surface medium region by using a second surface medium region recognition device, for example, scanning the boundary of a carpet region by using a carpet recognition device 103. After scanning, an initialization region 2100 as shown in FIG. 20 may be produced according to the scanned boundary, and the initialization region 2100 is recorded in the automatic cleaning device.

Next, boundary coordinates of the initialization region 2100 may be merged, for example, the adjacent boundary coordinates may be merged into one coordinate to acquire a merged region 2200 smoother than the initialization region as shown in FIG. 21 in the boundary, to update the stored map using the merged region as the second surface medium region map, or to generate a new room map.

It should be noted that when the automatic cleaning device is controlled to enter the wall-following cleaning mode, if the automatic cleaning device detects the second surface medium region in a wall-following cleaning process, the second surface medium region is ignored first, and the automatic cleaning device is controlled to continue wall-following cleaning until the wall-following cleaning ends and the automatic cleaning device exits the wall-following cleaning mode. In addition, in the wall-following cleaning process, the automatic cleaning device may also mark the detected second surface medium region and determine whether the second surface medium region exists in the stored map, and if the second surface medium region does not exist in the stored map, store the second surface medium region in the stored map for reference during cleaning.

In an exemplary embodiment of the present disclosure, after the wall-following cleaning mode ends, the automatic cleaning device is controlled to enter the dual-region cleaning mode. After the automatic cleaning device enters the dual-region cleaning mode, whether the second surface medium region exists in the stored map can be determined according to the stored map in the automatic cleaning device. If the second surface medium region exists, the automatic cleaning device is controlled to enter the position of the second surface medium region recorded in the stored map, and whether the second surface medium region still exists is detected. If the second surface medium region exists, the automatic cleaning device is controlled to clean the second surface medium region. If the second surface medium region does not exist, the second surface medium region is deleted from the stored map to update the stored map.

Optionally, in the process of cleaning the second surface medium region by the automatic cleaning device, in the second surface medium region, the automatic cleaning device may be controlled to clean a boundary region of the second surface medium region first, i.e., the inner side of the boundary of the second surface medium region, so as to define a scope of the second surface medium region; and after cleaning of the boundary region is completed, the automatic cleaning device is controlled to clean remaining regions of the second surface medium region in the defined scope of the second surface medium region.

The automatic cleaning device may be controlled to clean in a zigzag way (go straight-U turn-go straight-U turn) when the automatic cleaning device cleans the remaining regions of the second surface medium region. Or, other cleaning ways may also be set according to an actual situation, which is not particularly limited by the exemplary embodiment of the present disclosure.

Generally, there may be more than one second surface medium region in one room. At this time, after cleaning the above second surface medium region, the cleaned second surface medium region may be marked as a cleaned region, and whether a next second surface medium region exists is determined. If next second surface medium region exists, the next second surface medium region is cleaned until cleaning of all second surface medium regions in the room is completed, and then the automatic cleaning device may be controlled to clean the first surface medium region.

In the process of cleaning the first surface medium region by the automatic cleaning device, a second surface medium region which is not cleaned may be detected. At this time, if the second surface medium region which is not cleaned exists, the automatic cleaning device is controlled to clean the second surface medium region which is not cleaned, and the second surface medium region which is not cleaned is stored in the stored map for use during next cleaning. Until cleaning of all the second surface medium regions which are not cleaned is completed, the automatic cleaning device is controlled to continue cleaning the first surface medium region until cleaning of the first surface medium region is completed.

In the process of cleaning the first surface medium region by the automatic cleaning device, the automatic cleaning device may be controlled to clean in a zigzag way (go straight-U turn-go straight-U turn) according to the first surface medium region defined during wall-following cleaning. Or, other cleaning ways may also be set according to the actual situation, which is not particularly limited by the exemplary embodiment of the present disclosure.

In practical application, in the process of marking the cleaned region, a coloring algorithm may be used for marking the cleaned region, and other methods may also be used for marking the cleaned region, which is not particularly limited by the exemplary embodiment of the present disclosure.

In an exemplary embodiment of the present invention, in the process of cleaning the second surface medium region, if the second surface medium region is a cross-block region, the block restriction is ignored and a cleaning robot is controlled to clean the whole second surface medium region. The cross-block may mean crossing different rooms; that is to say, the second surface medium region occupies part of regions of at least two rooms, and then the restriction of the two rooms may be ignored. Firstly, the cleaning robot is controlled to clean the whole second surface medium region, and mark the second surface medium region as the cleaned region, and then the second surface medium region will not be cleaned any more in the cleaning process of the two rooms.

In the cleaning method for the automatic cleaning device according to the exemplary embodiment of the present invention, by preferentially cleaning the second surface medium region, for example, the second surface medium region such as the carpet may be cleaned when the wet cleaning module is raised; then the wet cleaning module is lowered to clean the first surface medium region, that is, the whole cleaning process can be completed by controlling the wet cleaning module to switch between raising and lowering once, thereby avoiding frequent switching. Thus, the cleaning efficiency is improved and the service life of the automatic cleaning device is prolonged.

In practical application, the automatic cleaning device also includes other functions to help realize the overall operation, which will not be described in detail in the exemplary embodiment.

It should be noted that although various steps of the method in the present invention are described in a specific order in the accompanying drawings, this does not require or imply that these steps must be executed in this specific order, or that all the steps shown must be executed to achieve the desired results. Additionally or alternatively, some steps may be omitted, multiple steps may be combined into one step for execution, and/or one step may be decomposed into multiple steps for execution, etc.

In an exemplary embodiment of the present invention, a cleaning apparatus for an automatic cleaning device is also provided, which is disposed in the automatic cleaning device and is used in cleaning of a first surface medium region and a second surface medium region in a dual-region cleaning mode. As shown in FIG. 22, the cleaning apparatus 2300 for the automatic cleaning device may include a region determination module 2301, a first cleaning control module 2302 and a second cleaning control module 2303.

The region determination module 2301 is configured to, after the automatic cleaning device enters the dual-region cleaning mode, determine whether the second surface medium region exists according to a stored map in the automatic cleaning device.

The first cleaning control module 2302 is configured to: if the second surface medium region exists, clean the second surface medium region; and after cleaning of the second surface medium region is completed, mark the second surface medium region as a cleaned region; determine whether a next second surface medium region exists; and clean the next second surface medium region if the next second surface medium region exists, until cleaning of all the second surface medium regions is completed.

The second cleaning control module 2303 is configured to control the automatic cleaning device to clean the first surface medium region.

The specific details of respective modules of the cleaning apparatus for the automatic cleaning device mentioned above have been described in detail in the corresponding cleaning method for the automatic cleaning device, and thus are not repeated here.

It should be noted that although several modules or units of the apparatus for execution are mentioned in the above detailed descriptions, this division is not mandatory. In fact, according to the embodiments of the present disclosure, the features and functions of two or more modules or units described above may be embodied in one module or unit. On the contrary, the features and functions of one module or unit described above may be further divided and embodied by multiple modules or units.

In an exemplary embodiment of the present invention, an electronic device capable of implementing the above methods is also provided.

Those skilled in the art can understand that various aspects of the present invention can be implemented as systems, methods or program products. Therefore, various aspects of the present invention can be specifically implemented as complete hardware, complete software (including firmware, microcode, etc.), or a combination of hardware and software, which can be collectively referred to as "circuit", "module" or "system" here.

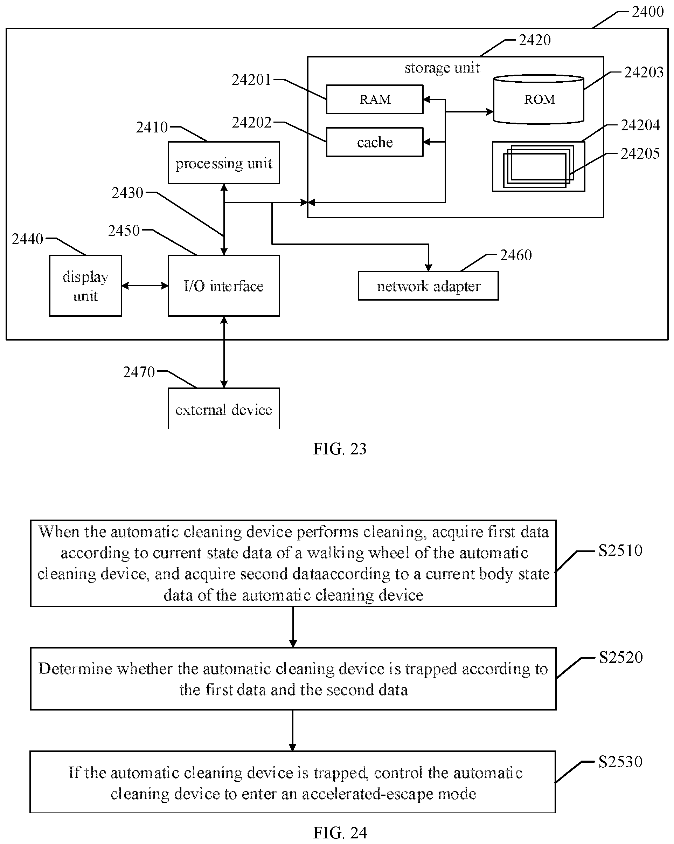

An electronic device 2400 according to the embodiment of the present invention will be described below with reference to FIG. 23. The electronic device 2400 shown in FIG. 23 is just an example, and should not be construed as constituting any limitation to the functions and application scope of the embodiments of the present disclosure.

As shown in FIG. 23, the electronic device 2400 is represented in the form of a general-purpose computing apparatus. Components of the electronic device 2400 may include, but are not limited to, at least one processing unit 2410, at least one storage unit 2420, a bus 2430 connecting different system components (including the storage unit 2420 and the processing unit 2410), and a display unit 2440.

The storage unit 2420 stores a program code, and the program code may be executed by the processing unit 2410 to cause the processing unit 2410 to perform the steps according to various exemplary embodiments of the present disclosure described in the above "exemplary method" section of the description. For example, the processing unit 2410 may perform the following steps: in step S2010, after the automatic cleaning device enters the dual-region cleaning mode, determining whether the second surface medium region exists according to a stored map in the automatic cleaning device; in step S2020, if the second surface medium region exists, cleaning the second surface medium region; in step S2030, after cleaning of the second surface medium region is completed, marking the second surface medium region as a cleaned region, determining whether a next second surface medium region exists, and cleaning the next second surface medium region if the next second surface medium exists, until cleaning of all second surface medium regions is completed; and in step S2040, controlling the automatic cleaning device to clean the first surface medium region, as shown in FIG. 19.

The storage unit 2420 may include a readable medium in the form of a volatile storage unit, such as a random access memory (RAM) unit 24201 and/or a cache storage unit 24202, and may further include a read-only memory (ROM) unit 24203.

The storage unit 2420 may also include a program/utility 24204 with a set of (at least one) program modules 24205. Such program modules 24205 include, but are not limited to, an operating system, one or more applications, other program modules and program data, and each or a combination of these examples may include the implementation of a network environment.

The bus 2430 may represent one or more of several bus structures, including a storage unit bus or a storage unit controller, a peripheral bus, a graphics acceleration port, a processing unit, or a local bus using any of a variety of bus structures.

The electronic device 2400 may also communicate with one or more external devices 2470 (such as a keyboard, a pointing apparatus and a Bluetooth apparatus), and may also communicate with one or more devices that enable users to interact with the electronic device 2400, and/or communicate with any device (such as a router and a modem) that enables the electronic device 2400 to communicate with one or more other computing devices. This communication may be performed through an input/output (I/O) interface 2450. Moreover, the electronic device 2400 may also communicate with one or more networks (for example, a local area network (LAN), a wide area network (WAN) and/or a public network, such as the Internet) through a network adapter 2460. As shown in the figure, the network adapter 2860 communicates with other modules of the electronic device 2400 through the bus 2430. It should be understood that although not shown in the figure, other hardware and/or software modules may be used in conjunction with the electronic device 2400, including but not limited to microcode, device drives, redundant processing units, external disk drive arrays, RAID systems, tape drives, data backup storage systems, and the like.

Usually, the resistance is generally small when the automatic cleaning device cleans a smooth ground, but when the automatic cleaning device cleans the carpet, especially a long-pile carpet, or a mat, clothes, etc., it is extremely easy for a chassis of the automatic cleaning device to be in contact with long pile on the carpet, which will increase a traveling resistance of the automatic cleaning device. In addition, the automatic cleaning device including the wet cleaning module also has a water tank, which will undoubtedly increase the traveling resistance of the automatic cleaning device when the water tank is filled with water. Under the action of the resistance, it is easy for the automatic cleaning device to be stuck and thus unable to move.

Based on the above situation, referring to FIG. 24, the flowchart of a method for controlling an automatic cleaning device according to an exemplary embodiment of the present disclosure is shown, which may specifically include the following steps:

In step S2510, when the automatic cleaning device performs cleaning, first data is acquired according to current state data of a walking wheel of the automatic cleaning device, and second data is acquired according to a current body state data of the automatic cleaning device.

In step S2520, whether the automatic cleaning device is trapped is determined according to the first data and the second data.

In step S2530, if the automatic cleaning device is trapped, the automatic cleaning device is controlled to enter an accelerated-escape mode.

In the method for controlling the automatic cleaning device according to the exemplary embodiment of the present invention, during cleaning of the automatic cleaning device, if the first data acquired according to the current state data of the walking wheel is different from the second data acquired according to the current body state data, it can be determined that the automatic cleaning device is trapped; and at this time, it is possible to help the automatic cleaning device escape by the accelerated-escape mode, so as to reduce the probability that the automatic cleaning device is stuck and cannot move.

The method for controlling the automatic cleaning device is not only used in the scene where the automatic cleaning device cleans the surface medium region such as the long-pile carpet, but also used in the scene where the automatic cleaning device crosses a doorsill or small steps or is trapped by an obstacle. Any scene where escape can be realized by the method for controlling the automatic cleaning device according to the exemplary embodiment of the present disclosure falls within the protection scope of the exemplary embodiment of the present disclosure.

In an exemplary embodiment of the present invention, when the automatic cleaning device is trapped in the cleaning process and slips, the walking wheel of the automatic cleaning device generally idles. At this time, the first data acquired according to the current state data of the walking wheel is usually different from the second data acquired according to the current body state data. Therefore, whether the automatic cleaning device is trapped can be determined according to a difference between the first data and the second data.

The following explains the specific process of determining whether the automatic cleaning device is trapped in combination with two different states.

A first state: when the automatic cleaning device is in a rotating state, a theoretical angular velocity of the walking wheel is acquired as the first data according to the current state data of the walking wheel of the automatic cleaning device; and generally, when the automatic cleaning device is trapped but not stopped, the walking wheel will be in an idling state. At this time, according to the state data of the walking wheel, that is, a walking wheel sensor acquires data of the walking wheel sensor, such as a rotating speed of the walking wheel, and the angular velocity of the walking wheel can be determined according to the rotating speed of the walking wheel. For example, when the rotating speed is n revolutions per minute, the angular velocity ω is equal to n*2π/60 radians per second. The angular velocity here is called the theoretical angular velocity since it is acquired in the idling state of the walking wheel, not in the real situation.

At the same time, an actual angular velocity of the walking wheel may also be acquired as the second data according to the current body state data of the automatic cleaning device, and the body state data is generally acquired according to a state sensor on the body. Therefore, the second data under the current body state can be acquired according to the data of the state sensor of the automatic cleaning device. For example, according to the current body state data measured by a gyroscope on the automatic cleaning device, the angular velocity actually generated by the walking wheel can be calculated. The state sensor includes the gyroscope, a motor power sensor, a cliff sensor or touch sensor or many other sensors for measuring the state data.

Generally, the first data and the second data acquired above are the same under the non-slippery situation such as a hard ground, but on the medium which may easily cause slippage such as the long-pile carpet, the first data is usually greater than the second data due to the resistance of the medium.

In an exemplary embodiment of the present invention, if the difference between the first data and the second data is greater than a first threshold and the difference being greater than the first threshold lasts for first preset time, it is determined that the automatic cleaning device is trapped. At this time, it is needed to control the automatic cleaning device to enter the accelerated-escape mode. The accelerated-escape mode may include controlling the automatic cleaning device to perform instantaneous acceleration after deceleration. In the case of instantaneous acceleration after deceleration, a static frictional force of the automatic cleaning device on the medium is converted to a sliding frictional force. Since the sliding frictional force is less than the maximum static frictional force, when the automatic cleaning device is in the sliding frictional force, even if the acceleration is the same as that in the case of the static frictional force, it is more easily for the automatic cleaning device to escape, that is, get rid of the current idling state, thereby increasing the escape probability of the automatic cleaning device and reducing the case that the automatic cleaning device gets stuck.

In an exemplary embodiment of the present invention, the above processes of detection, data calculation and instant acceleration after deceleration are automatically completed by the automatic cleaning device, so that the probability of failure of the automatic cleaning device can be reduced, the automation degree of the automatic cleaning device can be improved, and then the user experience can be further improved.

In practical application, the first threshold and the first preset time may be set according to the actual situation, for example, the first threshold may be 2-10 radians/second, and the first preset time may be 3-6 seconds, etc., which are not particularly limited by the exemplary embodiment of the present disclosure.

In addition, through setting of the first preset time, the situation that the automatic cleaning device crosses some smaller obstacles and misjudgment is made can be eliminated.

A second state: under the condition that the automatic cleaning device is trapped due to slipping when it is in a straight forward movement state, theoretical output power of a motor is acquired as the first data according to the current state data of the walking wheel of the automatic cleaning device; usually, on the carpet, such as the long-pile carpet, with larger resistance, the output power required for the automatic cleaning device to travel for a certain distance is generally less than the actual output power of the motor of the automatic cleaning device. That is to say, the output power of the motor calculated according to a current traveling distance of the walking wheel acquired by the walking wheel sensor belongs to the theoretical output power of the motor, and is less than the actual output power of the motor acquired according to the current body state data of the automatic cleaning device, that is, the first data should be less than the second data.

In an exemplary embodiment of the present invention, if the difference between the first data and the second data is less than a second threshold and the difference being less than the second threshold lasts for second preset time, it is determined that the automatic cleaning device is trapped. At this time, it is necessary to control the automatic cleaning device to enter the accelerated-escape mode to help the automatic cleaning device get rid of the current trapped state. The specific situation of the accelerated-escape mode has been described in detail in the above embodiment, and will not be repeated here.

In practical application, the second threshold is a power value, and the second threshold and the second preset time may be set according to the actual situation, for example, the second threshold may be 5-10W, and the first preset time may be 3-6 seconds, etc., which are not particularly limited by the exemplary embodiment of the present disclosure.

A third state: when the automatic cleaning device encounters an obstacle and is in a backward movement state, in the case that the automatic cleaning device is trapped in the backward movement state, for example, in the case that the automatic cleaning device is trapped by the long pile of the long-pile carpet and slips, similar to the case of slipping during advancing in the second state, the theoretical output power of the motor may be acquired as the first data according to the current state data of the walking wheel of the automatic cleaning device; and the actual output power of the motor is acquired as the second data according to the current body state data of the automatic cleaning device. The first data should be less than the second data.

When encountering an obstacle and thus moving backward, the automatic cleaning device usually needs to make continuous accelerated backward movements to avoid getting stuck, which means that there may be a misjudgment when whether the automatic cleaning device is trapped is determined only based on the magnitudes of the first data and the second data..

Therefore, in an exemplary embodiment of the present invention, on the basis of determining the magnitudes of the first data and the second data, determination on the current of a main brush of the automatic cleaning device is also included. On the medium such as the long-pile carpet, the main brush of the automatic cleaning device will also be subject to great resistance during rotating, resulting in an increase in the current. Therefore, by adding the determination on the current of the main brush, the accuracy of determining whether the automatic cleaning device is trapped in the backward movement state can increase, and the probability of misjudgment is reduced.

In an exemplary embodiment of the present invention, if the difference between the first data and the second data is less than a third threshold and the difference being less than the third threshold lasts for third preset time, and the current of the main brush of the automatic cleaning device exceeds a fourth threshold and the current exceeding the fourth threshold lasts for fourth preset time, it is determined that the automatic cleaning device is trapped.

In practical application, the third threshold is a power value, and the third threshold and the third preset time may be set according to the actual situation, for example, the third threshold may be 7-15W, and the first preset time may be 3-6 seconds. The fourth threshold is a current value, the fourth threshold and the fourth preset time may be set according to the actual situation, and the fourth preset time may be equal to or greater than the third preset time, which are not particularly limited by the exemplary embodiment of the present disclosure.

In practical application, the current of the main brush the will also increase when a foreign object is stuck into the main brush of the automatic cleaning device, and the output power of the motor will also increase when the automatic cleaning device crosses a doorsill or in other scenes. Therefore, in order to reduce the misjudgment on whether the automatic cleaning device is trapped by the medium in the method for controlling the automatic cleaning device according to the exemplary embodiment of the present disclosure, and thus reduce the probability that the automatic cleaning device enters the accelerated-escape mode, in the exemplary embodiment of the present disclosure, the step of excluding the misjudgment is also added. This can reduce the probability of the dangerous situation caused by the fact the automatic cleaning device is only trapped by the foreign object on a short-pile carpet, or in other cases, and the automatic cleaning device rushes out for a long distance during instant acceleration after deceleration. Being trapped by the medium refers to the situation that the automatic cleaning device is trapped by the medium such as the long-pile carpet and slips.

In an exemplary embodiment of the present invention, the result of instant acceleration after deceleration may be calculated according to an accelerometer on the automatic cleaning device, for example, a peak change value of the accelerometer on the automatic cleaning device may be calculated. If the peak change value of the accelerometer on the automatic cleaning device exceeds a threshold, it means that the acceleration of the automatic cleaning device is relatively high and fluctuates greatly, which indirectly reflects that the resistance of the medium where the automatic cleaning device is located is relatively small, and it is not necessarily the medium such as the long-pile carpet. At this time, it can be determined that the automatic cleaning device is on a misjudgment-prone medium. If it is determined that the automatic cleaning device is on the misjudgment-prone medium, the accelerated-escape mode is turned off when the automatic cleaning device is on the misjudgment-prone medium, so as to avoid the danger caused by misjudgment when the accelerated-escape mode is turned on, and also prolong the service life of the automatic cleaning device.

In practical application, the threshold may be specifically set according to performance of the automatic cleaning device, which is not particularly limited by the exemplary embodiment of the present disclosure.

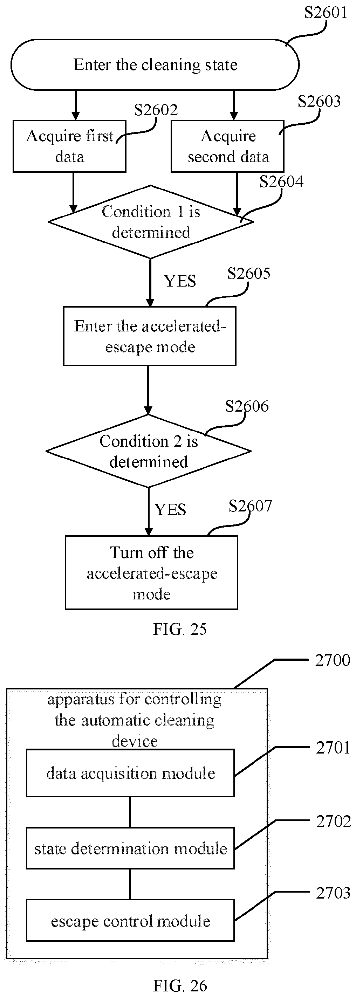

Referring to FIG. 25, operation steps of the method for controlling the automatic cleaning device according to the exemplary embodiment of the present invention are shown, and may specifically include the following steps. In step S2601, the automatic cleaning device enters a cleaning state. The method proceeds to step S2602, the first data is acquired according to the current state data of the walking wheel of the automatic cleaning device, and at the same time, the method proceeds to step S2603, the second data is acquired according to the current body state data of the automatic cleaning device. Next, the method proceeds to step S2604, determining condition 1: determining whether the automatic cleaning device is trapped according to the first data and the second data; and if yes, that is, the automatic cleaning device is trapped, the method proceeds to step S2605, and control the automatic cleaning device to enter the accelerated-escape mode to escape. After step S2605, the process may also proceed to step S2606, that is, determining condition 2: determining whether it is a misjudgment caused by non-medium trapping; and if yes, the process proceeds to step S2607: turning off the accelerated-escape mode.

In the method for controlling the automatic cleaning device according to the exemplary embodiment of the present invention, during cleaning of the automatic cleaning device, not only whether the automatic cleaning device is trapped by the medium where it is located is determined, but also the misjudgment caused by the non-medium is excluded, thereby improving the determining accuracy. Moreover, by setting different determining criteria in different states, the accuracy of determining whether the automatic cleaning device is trapped can further increase, the escape efficiency of the automatic cleaning device is improved, the danger caused by the misjudgment due to the non-medium is avoided, and thus the service life of the automatic cleaning device is prolonged.

In practical application, the automatic cleaning device also includes other functions to help realize the overall operation, which will not be described in detail in the exemplary embodiment.

It should be noted that although various steps of the method are described in a specific order in the accompanying drawings, this does not require or imply that these steps must be executed in this specific order, or that all the steps shown must be executed to achieve the desired results. Additionally or alternatively, some steps may be omitted, multiple steps may be combined into one step for execution, and/or one step may be decomposed into multiple steps for execution, etc.

In an exemplary embodiment, an apparatus for controlling an automatic cleaning device is also provided. As shown in FIG. 26, the apparatus for controlling the automatic cleaning device 2700 may include a data acquisition module 2701, a state determination module 2702, and an escape control module 2703.

The data acquisition module 2701 is configured to, when the automatic cleaning device performs cleaning, acquire first data according to current state data of a walking wheel of the automatic cleaning device, and acquire second data according to a current body state data of the automatic cleaning device.

The state determination module 2702 is configured to determine whether the automatic cleaning device is trapped according to the first data and the second data.

The escape control module 2703 is configured to, if the automatic cleaning device is trapped, control the automatic cleaning device to enter an accelerated-escape mode.

The specific details of respective modules of the apparatus for controlling the automatic cleaning device mentioned above have been described in detail in the corresponding method for controlling the automatic cleaning device, and thus are not repeated here.

It should be noted that although several modules or units of the apparatus for execution are mentioned in the above detailed descriptions, this division is not mandatory. In fact, according to the embodiments of the present disclosure, the features and functions of two or more modules or units described above may be embodied in one module or unit. On the contrary, the features and functions of one module or unit described above may be further divided and embodied by multiple modules or units.

In an exemplary embodiment, an electronic device capable of implementing the above methods is also provided.

Those skilled in the art can understand that various aspects of the present invention can be implemented as systems, methods or program products. Therefore, various aspects of the present disclosure can be implemented as complete hardware, complete software (including firmware, microcode, etc.), or a combination of hardware and software, which can be collectively referred to as "circuit", "module" or "system" here.

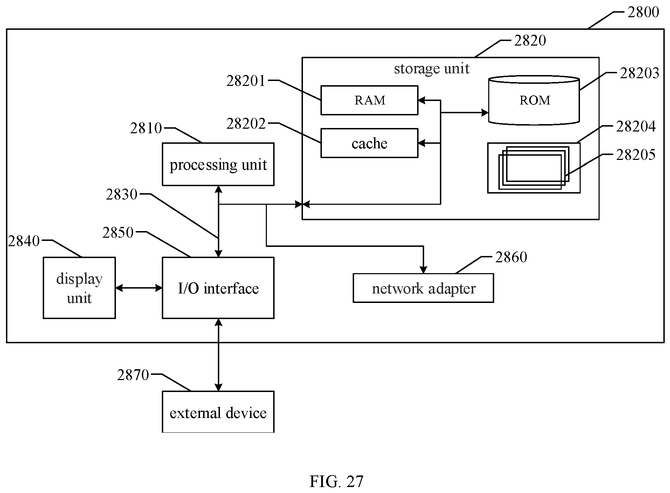

An electronic device 2800 according to the embodiment will be described below with reference to FIG. 27. The electronic device 2800 shown in FIG. 27 is just an example, and should not be construed as constituting any limitation to the functions of the embodiment of the present invention.

As shown in FIG. 27, the electronic device 2800 is represented in the form of a general-purpose computing device. Components of the electronic device 2800 may include, but are not limited to, at least one processing unit 2810, at least one storage unit 2820, a bus 2830 connecting different system components (including the storage unit 2820 and the processing unit 2810), and a display unit 2840.

The storage unit 2820 stores a program code, and the program code may be executed by the processing unit 2810 to cause the processing unit 2810 to perform the steps according to various exemplary embodiments of the present invention described in the above "exemplary method" section of the description. For example, the processing unit 2810 may perform the following steps: in step S2510, when the automatic cleaning device performs cleaning, acquiring first data according to current state data of a walking wheel of the automatic cleaning device, and acquiring second data according to a current body state data of the automatic cleaning device; in step S2520, determining whether the automatic cleaning device is trapped according to the first data and the second data; and in step S2530, if the automatic cleaning device is trapped, controlling the automatic cleaning device to enter an accelerated-escape mode, as shown in FIG. 24.

The storage unit 2820 may include a readable medium in the form of a volatile storage unit, such as a random access memory (RAM) unit 28201 and/or a cache storage unit 28202, and may further include a read-only memory (ROM) unit 28203.

The storage unit 2820 may also include a program/utility 28204 with a set of (at least one) program modules 28205. Such program modules 28205 include, but are not limited to, an operating system, one or more applications, other program modules and program data, and each or a combination of these examples may include the implementation of a network environment.

The bus 2830 may represent one or more of several bus structures, including a storage unit bus or a storage unit controller, a peripheral bus, a graphics acceleration port, a processing unit, or a local bus using any of a variety of bus structures.

The electronic device 2800 may also communicate with one or more external device 2870 (such as a keyboard, a pointing apparatus and a Bluetooth apparatus) and may also communicate with one or more devices that enable users to interact with the electronic device 2800, and/or communicate with any device (such as a router and a modem) that enables the electronic device 2800 to communicate with one or more other computing devices. This communication may be performed through an input/output (I/O) interface 2850. Moreover, the electronic device 2800 may also communicate with one or more networks (for example, a local area network (LAN), a wide area network (WAN) and/or a public network, such as the Internet) through a network adapter 2860. As shown in the figures, the network adapter 2860 communicates with other modules of the electronic device 2800 through the bus 2830. It should be understood that although not shown in the figure, other hardware and/or software modules may be used in conjunction with the electronic device 2800, including but not limited to microcode, device drives, redundant processing units, external disk drive arrays, RAID systems, tape drives, data backup storage systems, and the like.

Through the descriptions of the above embodiments, it is easy for those skilled in the art to understand that the exemplary embodiments described here may be realized by means of software or by combining software with necessary hardware. Therefore, the technical solutions according to the embodiments of the present invention can be embodied in the form of a software product, the software product can be stored in a non-volatile storage medium (which may be a CD-ROM, a USB flash drive, a mobile hard disk, etc.) or on the network, and includes several instructions to enable a computing apparatus (which may be a personal computer, a server, a terminal device, or a network device, etc.) to perform the methods according to the embodiments of the present disclosure.

In an exemplary embodiment a computer-readable storage medium is also provided, on which a program product capable of implementing the above methods of the description is stored. In some possible embodiments, various aspects of the present invention may also be realized in the form of a program product, which includes a program code. When the program product runs on a terminal device, the program code is used to cause the terminal device to perform the steps according to various exemplary embodiments of the present disclosure described in the above "exemplary method" section of the description.

The program product for realizing the above methods according to the embodiments of the present invention may adopt a portable compact disc read-only memory (CD-ROM) and include the program code, and may run on the terminal apparatus, such as a personal computer. However, the program product of the present disclosure is not limited thereto. In the document, the readable storage medium may be any tangible medium containing or storing a program, and the program may be used by or in combination with an instruction execution system, a device or an element.

The program product may adopt any combination of one or more readable mediums. The readable medium may be a readable signal medium or a readable storage medium. The readable storage medium may be, for example, but is not limited to, electrical, magnetic, optical, electromagnetic, infrared, or semiconductor systems, devices or elements, or any combination of the above. More specific examples (a non-exhaustive list) of the readable storage mediums include: an electrical connection with one or more conducting wires, a portable disk, a hard disk, an RAM, an ROM, an erasable programmable read-only memory (EPROM or flash memory), an optical fiber, a portable compact disk read-only memory (CD-ROM), an optical storage element, a magnetic storage element, or any suitable combination of the above.

The computer-readable signal medium may include a data signal propagated in a baseband or as part of a carrier wave, in which a readable program code is carried. This propagated data signal may take many forms, including but not limited to an electromagnetic signal, an optical signal or any suitable combination of the above. The readable signal medium may also be any readable medium other than the readable storage medium, and the readable medium may send, propagate or transmit a program for use by or in combination with an instruction execution system, a device or an element.

The program code contained in the readable medium may be transmitted by any suitable medium, including but not limited to a wireless medium, a wired medium, an optical cable, RF, etc., or any suitable combination of the above.

The program code for executing the operations of the present disclosure may be written in any combination of one or more programming languages, including object-oriented programming languages, such as Java or C++, and conventional procedural programming languages, such as "C" or similar programming languages. The program code may be completely executed on a user computing device, partially executed on the user device, executed as an independent software package, partially executed on the user computing device and partially executed on a remote computing device, or completely executed on the remote computing device or a server. In the situation involving the remote computing device, the remote computing device may be connected to the user computing device through any type of network, including the LAN or WAN, or may be connected to an external computing device (for example, through the Internet using an Internet service provider).

In addition, the above accompanying drawings are only schematic illustrations of the processing included in the methods according to the exemplary embodiments of the present invention, and are not for limiting purposes. It is easy to understand that the processing shown in the above accompanying drawings does not indicate or restrict the time sequence of the processing. In addition, it is also easy to understand that the processing may be performed synchronously or asynchronously for example in multiple modules.

Other embodiments will be apparent to those skilled in the art from consideration of the description and practice of the disclosed invention here. The present application is intended to cover any variations, uses, or adaptive changes of the present invention, which follow the general principles of the present disclosure and include common general knowledge or customary technical means, which are not disclosed herein, in the art. The description and embodiments are to be considered as exemplary only, and a true scope and spirit of the present invention are defined by the claims.

It will be appreciated that the present invention is not limited to the exact structure that has been described above and illustrated in the accompanying drawings, and that various modifications and changes can be made without departing from the scope thereof. The scope of the present invention is only defined by the appended claims.

## Claims

1. A cleaning method for an automatic cleaning device, used for a dual-region cleaning mode comprising cleaning of a first surface medium region and a second surface medium region, and the method comprising:
after the automatic cleaning device enters the dual-region cleaning mode, determining (S2010) whether the second surface medium region exists according to a stored map in the automatic cleaning device;
in response to that the second surface medium region exists, cleaning (S2020) the second surface medium region;
after cleaning of the second surface medium region is completed, marking (S2030) the second surface medium region as a cleaned region, determining whether a next second surface medium region exists, and cleaning the next second surface medium region in response to that the next second surface medium region exists, until cleaning of all second surface medium regions is completed; and
controlling (S2040) the automatic cleaning device to clean the first surface medium region.

2. The cleaning method for the automatic cleaning device according to claim **1,** wherein determining whether the second surface medium region exists according to the stored map in the automatic cleaning device comprises:
determining whether the stored map has the second surface medium region; and
in response to that the stored map has the second surface medium region, controlling the automatic cleaning device to enter a position of the second surface medium region recorded in the stored map, and detecting whether the second surface medium region exists.

3. The cleaning method for the automatic cleaning device according to claim 2, wherein in response to that the second surface medium region is not detected, the second surface medium region is deleted from the stored map to update the stored map.

4. The cleaning method for the automatic cleaning device according to any one of claims 1 to 3, wherein in a process of controlling the automatic cleaning device to clean the first surface medium region, the method further comprises:
detecting whether a second surface medium region which is not cleaned still exists;
in response to that the second surface medium region which is not cleaned exists, controlling the automatic cleaning device to clean the second surface medium region which is not cleaned and storing the second surface medium region which is not cleaned in the stored map; and
after cleaning of all second surface medium regions which are not cleaned is completed, controlling the automatic cleaning device to continue cleaning of the first surface medium region until cleaning of the first surface medium region is completed.

5. The cleaning method for the automatic cleaning device according to claim 1, wherein the method further comprises:
in a process of cleaning the second surface medium region, in response to that the second surface medium region is a cross-block region, ignoring a block restriction, and controlling a cleaning robot to clean an entirety of the second surface medium region.

6. The cleaning method for the automatic cleaning device according to claim 1, wherein before the automatic cleaning device enters the dual-region cleaning mode, the method further comprises:
controlling the automatic cleaning device to enter a wall-following cleaning mode;
in response to that the automatic cleaning device detects the second surface medium region in a wall-following cleaning process, ignoring the second surface medium region, and controlling the automatic cleaning device to continue wall-following cleaning until the wall-following cleaning ends and the automatic cleaning device exits the wall-following cleaning mode; and
controlling the automatic cleaning device to enter the dual-region cleaning mode.

7. The cleaning method for the automatic cleaning device according to claim 6, wherein in the wall-following cleaning process, the detected second surface medium region is marked, and whether the second surface medium region exists in the stored map is determined; and
in response to that the second surface medium region does not exist in the stored map, the second surface medium region is stored in the stored map.

8. The cleaning method for the automatic cleaning device according to claim 1, wherein cleaning the second surface medium region comprises:
cleaning, in the second surface medium region, a boundary region of the second surface medium region; and
after cleaning of the boundary region is completed, cleaning remaining regions of the second surface medium region.

9. A cleaning apparatus for an automatic cleaning device, used for a dual-region cleaning mode comprising cleaning of a first surface medium region and a second surface medium region, characterized the apparatus comprises:
a region determination module (2301) configured to, after the automatic cleaning device enters the dual-region cleaning mode, determine whether the second surface medium region exists according to a stored map in the automatic cleaning device;
a first cleaning control module (2302) configured to: in response to that the second surface medium region exists, clean the second surface medium region; and after cleaning of the second surface medium region is completed, mark the second surface medium region as a cleaned region, determine whether a next second surface medium region exists, and clean the next second surface medium region in response to that the next second surface medium region exists, until cleaning of all second surface medium regions is completed; and
a second cleaning control module (2303) configured to control the automatic cleaning device to clean the first surface medium region.

10. A computer-readable storage medium, having a computer program stored thereon, wherein when the computer program is executed by a processor, the cleaning method for the automatic cleaning device according to any one of claims 1 to 8 is implemented.

## Patentansprüche

1. Reinigungsverfahren für eine automatische Reinigungsvorrichtung, die für einen Zwei-Regionen-Reinigungsmodus benutzt wird, umfassend das Reinigen einer ersten Flächenmediumregion und einer zweiten Flächenmediumregion, und das Verfahren umfasst:
nachdem die automatische Reinigungsvorrichtung in den Zwei-Regionen-Reinigungsmodus eintritt, Bestimmen (S2010), ob die zweite Flächenmediumregion gemäß einer gespeicherten Karte in der automatischen Reinigungsvorrichtung existiert;
als Antwort darauf, dass die zweite Flächenmediumregion existiert, Reinigen (S2020) der zweiten Flächenmediumregion;
nachdem das Reinigen der zweiten Flächenmediumregion vollendet ist, Markieren (S2030) der zweiten Flächenmediumregion als eine gereinigte Region, Bestimmen, ob eine nächste zweite Flächenmediumregion existiert, und Reinigen der nächsten zweiten Flächenmediumregion als Antwort darauf, dass die nächste zweite Flächenmediumregion existiert, bis das Reinigen aller zweiten Flächenmediumregionen vollendet ist; und
Steuern (S2040) der automatischen Reinigungsvorrichtung, um die erste Flächenmediumregion zu reinigen.

2. Reinigungsverfahren für die automatische Reinigungsvorrichtung nach Anspruch 1, worin das Bestimmen, ob die zweite Flächenmediumregion gemäß der gespeicherten Karte in der automatischen Reinigungsvorrichtung existiert, umfasst:
Bestimmen, ob die gespeicherte Karte die zweite Flächenmediumregion aufweist; und
als Antwort darauf, dass die gespeicherte Karte die zweite Flächenmediumregion aufweist, Steuern der automatischen Reinigungsvorrichtung, damit sie in eine Stellung der zweiten Flächenmediumregion eintritt, die in der gespeicherten Karte aufgezeichnet ist, und Erkennen, ob die zweite Flächenmediumregion existiert.

3. Reinigungsverfahren für die automatische Reinigungsvorrichtung nach Anspruch 2, worin, als Antwort darauf, dass die zweite Flächenmediumregion nicht erkannt ist, die zweite Flächenmediumregion von der gespeicherten Karte gelöscht wird, um die gespeicherte Karte zu aktualisieren.

4. Reinigungsverfahren für die automatische Reinigungsvorrichtung nach einem der Ansprüche 1 bis 3, worin, in einem Prozess des Steuerns der automatischen Reinigungsvorrichtung, um die erste Flächenmediumregion zu reinigen, das Verfahren ferner umfasst:
Erkennen, ob eine zweite Flächenmediumregion, die nicht gereinigt ist, noch existiert;
als Antwort darauf, dass die zweite Flächenmediumregion, die nicht gereinigt ist, existiert, Steuern der automatischen Reinigungsvorrichtung, um die zweite Flächenmediumregion, die nicht gereinigt ist, zu reinigen, und Speichern der zweiten Flächenmediumregion, die nicht gereinigt ist, in der gespeicherten Karte; und
nachdem das Reinigen aller Flächenmediumregionen, die nicht gereinigt sind, vollendet ist, Steuern der automatischen Reinigungsvorrichtung, um das Reinigen der ersten Flächenmediumregion weiterzuführen, bis das Reinigen der ersten Flächenmediumregion vollendet ist.

5. Reinigungsverfahren für die automatische Reinigungsvorrichtung nach Anspruch 1, worin das Verfahren ferner umfasst:
in einem Prozess des Reinigens der zweiten Flächenmediumregion, als Antwort darauf, dass die zweite Flächenmediumregion eine Querblockregion ist, Ignorieren einer Blockeinschränkung, und Steuern eines Reinigungsroboters, damit er eine Ganzheit der zweiten Flächenmediumregion reinigt.

6. Reinigungsverfahren für die automatische Reinigungsvorrichtung nach Anspruch 1, worin, bevor die automatische Reinigungsvorrichtung in den Zwei-Regionen-Reinigungsmodus eintritt, das Verfahren ferner umfasst:
Steuern der automatischen Reinigungsvorrichtung, damit sie in einen Wand-folgenden Reinigungsmodus eintritt;
als Antwort darauf, dass die automatische Reinigungsvorrichtung die zweite Flächenmediumregion in einem Wand-folgenden Reinigungsprozess erkennt, Ignorieren der zweiten Flächenmediumregion, und Steuern der automatischen Reinigungsvorrichtung, damit sie die Wand-folgende Reinigung weiterführt, bis die Wand-folgende Reinigung endet und die automatische Reinigungsvorrichtung aus dem Wand-folgenden Reinigungsmodus austritt; und
Steuern der automatischen Reinigungsvorrichtung, damit sie in den Zwei-Regionen-Reinigungsmodus eintritt.

7. Reinigungsverfahren für die automatische Reinigungsvorrichtung nach Anspruch 6, worin, in dem Wand-folgenden Reinigungsprozess, die erkannte zweite Flächenmediumregion markiert ist, und es bestimmt wird, ob die zweite Flächenmediumregion in der gespeicherten Karte existiert; und
als Antwort darauf, dass die zweite Flächenmediumregion in der gespeicherten Karte nicht existiert, die zweite Flächenmediumregion in der gespeicherten Karte gespeichert wird.

8. Reinigungsverfahren für die automatische Reinigungsvorrichtung nach Anspruch 1, worin, das Reinigen der zweiten Flächenmediumregion umfasst:
Reinigen, in der zweiten Flächenmediumregion, einer Grenzregion der zweiten Flächenmediumregion; und
nachdem das Reinigen der Grenzregion vollendet ist, Reinigen von verbleibenden Regionen der zweiten Flächenmediumregion.

9. Reinigungsapparat für eine automatische Reinigungsvorrichtung, die für einen Zwei-Regionen-Reinigungsmodus benutzt wird, umfassend das Reinigen einer ersten Flächenmediumregion und einer zweiten Flächenmediumregion, **dadurch gekennzeichnet, dass** der Apparat umfasst:
ein Regionsbestimmungsmodul (2301), das dafür ausgelegt ist, nachdem die automatische Reinigungsvorrichtung in den Zwei-Regionen-Reinigungsmodus eintritt, zu bestimmen, ob die zweite Flächenmediumregion gemäß einer gespeicherten Karte in der automatischen Reinigungsvorrichtung existiert;
ein erstes Reinigungssteuerungsmodul (2302), das dafür ausgelegt ist: als Antwort darauf, dass die zweite Flächenmediumregion existiert, die zweite Flächenmediumregion zu reinigen; und nachdem das Reinigen der zweiten Flächenmediumregion vollendet ist, die zweite Flächenmediumregion als eine gereinigte Region zu markieren, zu bestimmen, ob eine nächste zweite Flächenmediumregion existiert, und die nächste zweite Flächenmediumregion als Antwort darauf zu reinigen, dass die nächste zweite Flächenmediumregion existiert, bis das Reinigen aller zweiten Flächenmediumregionen vollendet ist; und
ein zweites Reinigungssteuerungsmodul (2303), das dafür ausgelegt ist, die automatische Reinigungsvorrichtung zu steuern, um die erste Flächenmediumregion zu reinigen.

10. Computerlesbares Speichermedium, das ein darauf gespeichertes Computerprogramm hat, worin, wenn das Computerprogramm von einem Prozessor ausgeführt wird, das Reinigungsverfahren für die automatische Reinigungsvorrichtung nach einem der Ansprüche 1 bis 8 implementiert wird.

## Revendications

1. Procédé de nettoyage pour un dispositif de nettoyage automatique, utilisé pour un mode de nettoyage à deux régions comprenant le nettoyage d'une première région de milieu de surface et d'une seconde région de milieu de surface, et le procédé consiste à :
après que le dispositif de nettoyage automatique entre dans le mode de nettoyage à deux régions, déterminer (S2010) si la seconde région de milieu de surface existe selon une carte stockée dans le dispositif de nettoyage automatique ;
en réponse à l'existence de la seconde région de milieu de surface, nettoyer (S2020) la seconde région de milieu de surface ;
une fois le nettoyage de la seconde région de milieu de surface terminé, marquer (S2030) la seconde région de milieu de surface comme une région nettoyée, déterminer s'il existe une seconde région de milieu de surface suivante et nettoyer la seconde région de milieu de surface suivante en réponse à l'existence de la seconde région de milieu de surface suivante, jusqu'à ce que le nettoyage de toutes les secondes régions de milieu de surface soit terminé ; et
commander (S2040) le dispositif de nettoyage automatique pour nettoyer la première région de milieu de surface.

2. Procédé de nettoyage pour le dispositif de nettoyage automatique selon la revendication 1, dans lequel la détermination de l'existence de la seconde région de milieu de surface selon la carte stockée dans le dispositif de nettoyage automatique comprend :
déterminer si la carte stockée a la seconde région de milieu de surface ; et
en réponse au fait que la carte stockée a la seconde région de milieu de surface, commander le dispositif de nettoyage automatique pour entrer une position de la seconde région de milieu de surface enregistrée dans la carte stockée, et détecter l'existence de la seconde région de milieu de surface.

3. Procédé de nettoyage pour le dispositif de nettoyage automatique selon la revendication 2, dans lequel en réponse au fait que la seconde région de milieu de surface n'est pas détectée, la seconde région de milieu de surface est supprimée de la carte stockée pour mettre à jour la carte stockée.

4. Procédé de nettoyage pour le dispositif de nettoyage automatique selon l'une quelconque des revendications 1 à 3, dans lequel dans un processus de commande du dispositif de nettoyage automatique pour nettoyer la première région de milieu de surface, le procédé comprend en outre :
détecter si une seconde région de milieu de surface qui n'est pas nettoyée existe toujours ;
en réponse à l'existence de la seconde région de milieu de surface qui n'est pas nettoyée, commander le dispositif de nettoyage automatique pour nettoyer la seconde région de milieu de surface qui n'est pas nettoyée et stocker la seconde région de milieu de surface qui n'est pas nettoyée dans la carte stockée ; et
une fois que le nettoyage de toutes les secondes régions de milieu de surface qui ne sont pas nettoyées est terminé, commander le dispositif de nettoyage automatique pour continuer le nettoyage de la première région de milieu de surface jusqu'à ce que le nettoyage de la première région de milieu de surface soit terminé.

5. Procédé de nettoyage pour le dispositif de nettoyage automatique selon la revendication 1, dans lequel le procédé consiste en outre à :
dans un processus de nettoyage de la seconde région de milieu de surface, en réponse au fait que la seconde région de milieu de surface est une région de bloc croisé, ignorer une restriction de bloc, et commander un robot de nettoyage pour nettoyer une totalité de la seconde région de milieu de surface.

6. Procédé de nettoyage pour le dispositif de nettoyage automatique selon la revendication 1, dans lequel avant que le dispositif de nettoyage automatique n'entre dans le mode de nettoyage à deux régions, le procédé consiste en outre à :
commander le dispositif de nettoyage automatique pour entrer dans un mode de nettoyage de suivi de mur ;
en réponse à cela, le dispositif de nettoyage automatique détecte la seconde région de milieu de surface dans un processus de nettoyage de suivi de mur, ignorer la seconde région de milieu de surface et commander le dispositif de nettoyage automatique pour continuer le nettoyage de suivi de mur jusqu'à ce que le nettoyage de suivi de mur se termine et que le dispositif de nettoyage automatique quitte le mode de nettoyage de suivi de mur ; et
commander le dispositif de nettoyage automatique pour entrer en mode de nettoyage à deux zones.

7. Procédé de nettoyage pour le dispositif de nettoyage automatique selon la revendication 6, dans lequel dans le processus de nettoyage de suivi de mur, la seconde région de milieu de surface détectée est marquée, et si la seconde région de milieu de surface existe dans la carte stockée est déterminée ; et en réponse au fait que la seconde région de milieu de surface n'existe pas dans la carte stockée, la seconde région de milieu de surface est stockée dans la carte stockée.

8. Procédé de nettoyage pour le dispositif de nettoyage automatique selon la revendication 1, dans lequel le nettoyage de la seconde région de milieu de surface consiste à :
nettoyer, dans la seconde région de milieu de surface, une région limite de la seconde région de milieu de surface ; et
une fois le nettoyage de la région limite terminé, nettoyer les régions restantes de la seconde région de milieu de surface.

9. Appareil de nettoyage pour un dispositif de nettoyage automatique, utilisé pour un mode de nettoyage à deux régions comprenant le nettoyage d'une première région de milieu de surface et d'une seconde région de milieu de surface, **caractérisé en ce que** l'appareil comprend :
un module de détermination de région (2301) configuré pour, après que le dispositif de nettoyage automatique entre dans le mode de nettoyage à deux régions, déterminer si la seconde région de milieu de surface existe selon une carte stockée dans le dispositif de nettoyage automatique ;
un premier module de commande de nettoyage (2302) configuré pour : en réponse à l'existence de la seconde région de milieu de surface, nettoyer la seconde région de milieu de surface ; et une fois le nettoyage de la seconde région de milieu de surface terminé, marquer la seconde région de milieu de surface comme une région nettoyée, déterminer si une seconde région de milieu de surface suivante existe, et nettoyer la seconde région de milieu de surface suivante en réponse à l'existence de la seconde région de milieu de surface suivante, jusqu'à ce que le nettoyage de toutes les secondes régions de milieu de surface soit terminé ; et
un second module de commande de nettoyage (2303) configuré pour commander le dispositif de nettoyage automatique pour nettoyer la première région de milieu de surface.

10. Support de stockage lisible par ordinateur, ayant un programme informatique stocké dans celui-ci, dans lequel lorsque le programme informatique est exécuté par un processeur, le procédé de nettoyage pour le dispositif de nettoyage automatique selon l'une quelconque des revendications 1 à 8 est mis en œuvre.
